(19) Europäisches Patentamt
European Patent Office
Office européen des brevets

(11) EP 2 631 270 B1

(12) **EUROPEAN PATENT SPECIFICATION**

(45) Date of publication and mention of the grant of the patent:
**23.08.2017 Bulletin 2017/34**

(21) Application number: **11834263.3**

(22) Date of filing: **13.10.2011**

(51) Int Cl.:
***C08L 23/20*** (2006.01)
***C08J 5/18*** (2006.01)
***C08L 23/26*** (2006.01)
***B32B 27/34*** (2006.01)
***B32B 27/32*** (2006.01)
***C08L 77/00*** (2006.01)
***B32B 27/08*** (2006.01)

(86) International application number:
**PCT/JP2011/073565**

(87) International publication number:
**WO 2012/053423 (26.04.2012 Gazette 2012/17)**

(54) **FILM COMPRISING A POLY-4-METHYL-1-PENTENE BASED RESIN COMPOSITION AND LAMINATED ARTICLE**

FILM ENTHALTEND AUS AUF POLY-4-METHYL-1-PENTEN BASIERENDE HARZZUSAMMENSETZUNG UND LAMINIERTER VERBUNDARTIKEL

FILM COMPRENANT UNE COMPOSITION DE RÉSINE À BASE DE POLY(4-MÉTHYL-1-PENTÈNE) ET ARTICLE STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2010 JP 2010234146**

(43) Date of publication of application:
**28.08.2013 Bulletin 2013/35**

(73) Proprietor: **Mitsui Chemicals, Inc.**
**Tokyo 105-7117 (JP)**

(72) Inventors:
- **ENNA, Masahiro**
**Sodegaura-shi**
**Chiba 299-0265 (JP)**
- **FUJIHARA, Kazutoshi**
**Sodegaura-shi**
**Chiba 299-0265 (JP)**
- **TSUGANE, Yasuhito**
**Sodegaura-shi**
**Chiba 299-0265 (JP)**
- **ASO, Yoshiaki**
**Sodegaura-shi**
**Chiba 299-0265 (JP)**
- **SEKI, Ryoichi**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**JP-A- 11 189 726**
**JP-A- 60 053 549**
**JP-A- 60 135 443**
**JP-A- 60 144 361**
**JP-A- 63 215 761**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 631 270 B1

## Description

[Technical field]

The present invention relates to a film comprising a resin composition comprising poly-4-methyl-1-pentene, polyamide and modified poly-4-methyl-1-pentene obtainable by graft modification with an ethylenic unsaturated bond-containing monomer, and a laminatedd article comprising the film.

[Technical Background]

A (poly-4-methyl-1-pentene) polymer containing 4-methyl-1-pentene as a monomer has been used in various kinds of uses because of having excellent transparency, release properties and heat resistance. For example, sheets and films formed from the polymer are used for release films by making use of a high melting point, good release properties and high transparency thereof, and molded articles formed from the polymer are used for rubber hose mandrels (Patent document 1).

It is known that poly-4-methyl-1-pentene has a high melting point but it has a low modulus of elasticity at high temperatures, low strength and low heat dimensional stability, or it has low strength and low impact resistance of a molded article at ordinary temperature.

It is generally known that when a resin sheet is stretched, the mechanical strength at room temperature and at high temperatures is improved. However, a sheet prepared from poly-4-methyl-1-pentene has inferior stretching molding properties and stretching unevenness such as necking and the like and stretching fracture are easily and frequently caused. On this account, a method of preparing a multi-layered film of poly-4-methyl-1-pentene and a thermoplastic resin other than poly-4-methyl-1-pentene and stretching is proposed (Patent document 2).

Known poly-4-methyl-1-pentene has been known that it has low melt tension, low bubble stability at the time of inflation molding or blow molding, and it has problems such that the definite blow ratio cannot be kept during inflation molding, and the molding method of poly-4-methyl-1-pentene is limited.

Regarding to films and sheets formed from the poly-4-methyl-1-pentene polymer, composite formation such as multilayered films having an intermediate layer of other thermoplastic resin such as polypropylene and polyamide has been studied in order to improve the strength, the modulus of elasticity at high temperatures and various molding properties with maintaining the release properties of poly-4-methyl-1-pentene (Patent documents 3 and 4). The methods described in these documents, however, have a problem such that an adhesive layer made from an adhesive resin is necessary in order to prevent de-lamination with poly-4-methyl-1-pentene and other thermoplastic resins and the resins of a multilayered film cannot be reused.

Meanwhile, as improvement measures for strength, modulus of elasticity and molding properties, there is alloy formation with poly-4-methyl-1-pentene and a thermoplastic resin such as polyamide. For example, alloy formation with poly-4-methyl-1-pentene and polyamide using acid modified polyethylene or polypropylene as a compatibilizing agent has been disclosed (Patent documents 5 and 6). The documents disclose the improvement on high density, water absorbing properties and chemical resistance, which are defects of polyamide, because the alloys are polymer alloys containing polyamide mainly as a main component (matrix). These documents do not disclose the improvement on the strength and molding properties of poly-4-methyl-1-pentene with maintaining the release properties and low water absorbing properties which are characteristics of poly-4-methyl-1-pentene. Furthermore, the improvement on molding properties of films such as stretching properties and inflation molding properties has not been studied in the documents although these documents disclose the productions of injection molded articles.

JPS 60-53549 A relates to a poly-4-methyl-1-pentene composition that is produced by compounding (A) 10-90(wt)%, preferably 10-70% poly-4-methyl-1-pentene with (B) 0.1-40%, preferably 0.5-20% grafted poly-4-methyl-1-pentene having an intrinsic viscosity $\eta$ of 0.3-10dl/g and grafted with 0.5-15% unsaturated carboxylic acid or its derivative (based on the grafted resin), (C) 5-80%, preferably 10-80% nylon 66 resin and (D) 2-80%, preferably 10-60% inorganic fiber. The component B is preferably a resin having a molecular weight distribution (Mw/Mn) of 1-8, a melting point of 170-245 °C, a crystallinity of 1-45% and a DSC parameter of $\leq$4.0.

JPS 63-215761 A relates to a polymer composition that is obtained by mixing 5-85wt.% aromatic polyamide (A) wherein the diamine component is composed of aromatic diamine component units or aromatic polyamide (A) prepared by self-condensing an aminobenzoic acid and 15-95wt.% modified poly(4-methyl-1-pentene) polymer wherein part or the whole thereof is graft-modified by 0.01-10wt.% unsaturated carboxylic acid or derivative with 10-60 parts by wt. (per 100 parts by wt. of the total amount of the components A and B) reinforcing fiber (C).

[PRIOR ART]

[Patent Document]

Patent document 1: JP-A-2000-198118

Patent document 2: JP-A-2002-192673

Patent document 3: JP-A-2002-158242

Patent document 4: JP-A-H11-60848

Patent document 5: JP-A-H4-120169

Patent document 6: JP-B-H2-51941

[SUMMARY OF THE INVENTION]

[Subject to be solved by the Invention]

It is an object of the invention to provide a poly-4-methyl-1-pentene resin composition capable of improving molding properties for various molded articles which are the defects of poly-4-methyl-1-pentene, particularly capable of improving molding properties of a film with maintaining release properties which are the characteristics of poly-4-methyl-1-pentene, and it is another object of the invention to provide molded articles (films) having high strength obtainable from the resin composition.

[Means for solving the subject]

The present inventors have been earnestly studied for solving the subjects, and found that a resin composition having a specific proportion of poly-4-methyl-1-pentene, polyamide and modified poly-4-methyl-1-pentene containing a functional group such as acid anhydride and the like obtained by graft reaction of an ethylenic unsaturated bond-containing monomer can improve molding properties for various molded articles which are the defects of poly-4-methyl-1-pentene, particularly molding properties of a film while maintaining the release properties which are the characteristics of poly-4-methyl-1-pentene and further found that the strength of a molded article (film) obtainable from the resin composition can be enhanced. Thus, the present invention has been accomplished.

That is to say, the poly-4-methyl-1-pentene resin composition comprised in the film of the present invention comprises 50 to 99 parts by weight of poly-4-methyl-1-pentene (A), 1 to 50 parts by weight of polyamide (B) and 0.1 to 30 parts by weight of modified poly-4-methyl-1-pentene (C) prepared by graft modification by an ethylenic unsaturated bond-containing monomer, provided that the total amount of (A) and (B) is 100 parts by weight.

The poly-4-methyl-1-pentene resin composition comprised in the film of the present invention preferably comprises 58 to 92 parts by weight of poly-4-methyl-1-pentene (A) and 8 to 42 parts by weight of polyamide (B).

In the present invention, poly-4-methyl-1-pentene (A) preferably satisfies the following necessary conditions (A-i) to (A-ii).

(A-i) The melt flow rate (MFR; ASTM D1238, 260 °C, 5 Kgf) is from 1 to 500 g/10 min, and
(A-ii) the melting point (Tm) is from 210 to 250 °C.

In the present invention, polyamide (B) preferably satisfies the following necessary conditions (B-i) and (B-ii).

(B-i) The melt flow rate (MFR; ASTM D1238, 260 °C, 5 Kgf) is from 1 to 500 g/10 min, and
(B-ii) the melting point (Tm) is from 150 to 300 °C.

In the present invention, modified poly-4-methyl-1-pentene (C) preferably satisfies the following necessary conditions (C-i) to (C-iii).

(C-i) The melting point (Tm) is from 200 to 240 °C,
(C-ii) the grafted amount of ethylenic unsaturated bond-containing monomer in modified poly-4-methyl-1-pentene (C) is from 0.1 to 10 % by weight, and
(C-iii) the intrinsic viscosity [η] in decalin at 135 °C is from 0.2 to 4 dl/g.

In the present invention, the ethylenic unsaturated bond-containing monomer in modified poly-4-methyl-1-pentene (C) is preferably maleic anhydride.
The molded article of the present invention comprises the poly-4-methyl-1-pentene resin composition.
The preferable shapes of the molded article are stretched films, inflation films, laminates and release films.

[Effect of the Invention]

The poly-4-methyl-1-pentene resin composition comprised in the film of the present invention can improve molding properties such as stretching properties and inflation molding properties while maintaining release properties and low water absorption which are the properties of poly-4-methyl-1-pentene although it is difficult to improve the molding properties by a known alloy of poly-4-methyl-1-pentene and a thermoplastic resin, furthermore, the resin composition has a remarkable effect such that the strength of a molded article prepared from the resin composition is high. Therefore, the use of the poly-4-methyl-1-pentene resin composition enables to prepare the molded articles, and particularly, it enables to prepare stretching molded films, inflation films, laminates and release films favorably.

[Brief description of drawing]

Fig. 1 is a graph showing the relation between the content (part by weight) of polyamide (B) in the resin composition and the surface tension of the resin composition (Examples 1 to 3 and Comparative Examples 3, 5 and 7).
Fig. 2 is a digital image showing the film formation condition of an extrusion molded film with the content of polyamide (B) in Examples 1 to 3 and Comparative Example 6.
Fig. 3 is a digital image showing the stretching molding condition of a stretching molded film with the content of polyamide (B) in Examples 10 to 12 and Comparative Example 8.
Fig. 4 is a digital image showing the molding condition of an inflation molded film with the content of polyamide (B) in Examples 19 to 21 and Comparative Example 10.

[Embodiment for carrying out the Invention]

The poly-4-methyl-1-pentene resin composition comprised in the film of the present invention and molded articles obtainable by using the resin composition are described below.

Poly-4-methyl-1-pentene resin composition

The poly-4-methyl-1-pentene resin composition comprised in the film of the present invention comprises poly-4-methyl-1-pentene (A), polyamide (B) and modified poly-4-methyl-1-pentene (C) as essential components.
These components and components which may be added optionally will be described below.

Poly-4-methyl-1-pentene (A)

Poly-4-methyl-1-pentene (A) used in the present invention is produced by polymerizing a monomer containing 4-methyl-1-pentene in the presence of a known catalyst for olefin polymerization such as Zeigler-Natta catalyst and a metallocene catalyst.
Examples of poly-4-methyl-1-pentene (A) may include a homopolymer of 4-methyl-1-pentene and a copolymer of 4-methyl-1-pentene and another monomer. The poly-4-methyl-1-pentene (A) may include any of them as far as it can have the effect of the present invention.
Examples of the other monomer which is copolymerized with 4-methyl-1-pentene are ethylene and α-olefins of 3 to 20 carbon atoms excluding 4-methyl-1-pentene. Examples of the α-olefins may include propylene, 1-butene, 1-pentene, 3-methyl-1-butene, 1-hexene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene,

1-hexadecene, 1-octadecene and 1-eicosene. Among them, preferable examples are α-olefins of 6 to 20 carbon atoms excluding 4-methyl-1-pentene, and more preferable examples are α-olefins of 8 to 20 carbon atoms. These olefins can be used singly or two or more may be combined for use.

When poly-4-methyl-1-pentene (A) is a copolymer, the amount of the constituting unit derived from 4-methyl-1-pentene is usually not less than 90 mol%, preferably not less than 95 mol% in the copolymer.

Poly-4-methyl-1-pentene (A) used in the present invention preferably satisfies the following necessary conditions (A-i) and (A-ii).

(A-i) The melt flow rate (MFR; ASTM D1238, 260°C, 5 kgf) is usually from 1 to 500 g/10 min, preferably 2 to 100 g/10min, more preferably 3 to 30 g/10min. The MFR is preferably in the above range in the viewpoint of fluidity at the time of molding.

(A-ii) The melting point (Tm) is usually from 210 to 250°C, preferably 215 to 245°C, more preferably 220 to 240°C, furthermore preferably 224 to 240°C. When the melting point is lower than 210°C, molded articles obtainable by using the resin composition containing poly-4-methyl-1-pentene are lowered on strength. When the melting point is higher than 250°C, molded articles obtainable by using the resin composition containing poly-4-methyl-1-pentene are optionally lowered on impact strength and toughness.

The melting point is measured using a differential scanning calorimeter (DSC) in the following manner. A specimen in an amount of 3 to 7 mg is sealed in an aluminum pan, and heated from room temperature to 280°C at a rate of 10°C /min. The specimen is kept at 280°C for 5 min in order to dissolve completely. Next, the specimen is cooled to -50°C at a rate of 10°C /min and allowed to stand at -50°C for 5 min. Thereafter, the specimen is heated again to 280°C at a rate of 10°C /min. In the second heating test, the peak temperature was taken as a melting point (Tm). The melting points of polyamide (B) and modified poly-4-methyl-1-pentene (C) as described later can be also measured in the same manner.

The production process of poly-4-methyl-1-pentene (A) comprises adding the monomer for constituting poly-4-methyl-1-pentene (A) and feeding a polymerization catalyst containing a transition metal catalyst component and a co-catalyst component in a polymerization reactor.

The polymerization of the monomer for constituting poly-4-methyl-1-pentene (A) can be carried out by a liquid phase polymerization method such as solution polymerization, suspension polymerization or bulk polymerization, a gas phase polymerization method and known polymerization methods. When the polymerization is carried out by the liquid phase polymerization method, it is possible to use, as a solvent, an inert hydrocarbon or a liquid olefin which is fed to the reaction under the reaction conditions. Furthermore, the polymerization can be carried out by any one of batch-wise, semi-continuous and continuous methods. Moreover, the polymerization can be carried out in two or more steps with different reaction conditions.

In the production process of poly-4-methyl-1-pentene (A), examples of the transition metal catalyst component for constituting the polymerization catalyst are a solid titanium catalyst which comprises magnesium, titanium, halogen and an electron donor and a metallocene catalyst. Particularly, a preferable example is a solid titanium catalyst, and a more preferable example is a titanium catalyst, which is described in JP-A-2003-105022, formed from a compound containing titanium, magnesium, halogen and plural ether bonds and obtainable by allowing a magnesium compound suspended in an inert hydrocarbon solvent to contact with a compound having at least two ether bonds through plural atoms as an electron donor and a liquid titanium compound.

Examples of the inert hydrocarbon solvent are hexane, decane and dodecane.

Examples of the electron donor are compounds having at least two ether bonds through plural atoms such as 2-isobutyl-2-isopropyl-1,3-dimethoxypropane and 2-isopentyl-2-isopropyl-1,3-dimethoxypropane.

Examples of the magnesium compound are magnesium anhydrous chloride and magnesium methoxychloride.

In the liquid phase polymerization method, the solid titanium catalyst is used in an amount of usually from 0.0001 to 0.5 mmol, preferably 0.0005 to 0.1 mmol in terms of titanium atom based on 1 L of the total liquid volume.

In the solid titanium catalyst, the proportion (atomic ratio) of halogen to titanium is usually from 2 to 100, preferably 4 to 90. The proportion (molar ratio) of the compound having at least two ether bonds to titanium is usually from 0.01 to 100, preferably 0.2 to 10. The proportion (atomic ratio) of magnesium to titanium is usually from 2 to 100, preferably 4 to 50.

Examples of the co-catalyst component used with the solid titanium catalyst (organometallic compound catalyst component) are organoaluminum compounds such as organoaluminum compounds represented by $R^anAlX_{3-n}$.

In $R^anAlX_{3-n}$, n is one of 1 to 3. $R^a$ is a hydrocarbon group of 1 to 12 carbon atoms, for example, an alkyl group, a cycloalkyl group and an aryl group, specifically, a methyl group, an ethyl group, an n-propyl group, an isopropyl group, an isobutyl group, a pentyl group, a hexyl group, an octyl group, a cyclopentyl group, a cyclohexyl group, a phenyl group and a tolyl group. When n is 2 or 3, $R^a$'s may be the same as or different each other. X is a halogen or hydrogen and when n is 2 or 3, X's may be the same as or different each other.

Examples of the organoaluminum compounds represented by $R^anAlX_{3-n}$ are trialkyl aluminums such as trimethyl aluminum, triethyl aluminum, triisopropyl aluminum, triisobutyl aluminum, trioctyl aluminum and tri-2-ethylhexylaluminum;

alkenyl aluminums such as isoprenyl aluminum and the like;
dialkyl aluminum halides such as dimethyl aluminum chloride, diethyl aluminum chloride, diisopropyl aluminum chloride, diisobutyl aluminum chloride and dimethyl aluminum bromide;
alkyl aluminum sesquihalides such as methylaluminum sesquichloride, ethylaluminum sesquichloride, isopropylaluminum sesquichloride, butylaluminum sesquichloride and ethylaluminum sesquibromide;
alkyl aluminum dihalides such as methylaluminum dichloride, ethylaluminum dichloride, isopropylaluminum dichloride and ethylaluminum dibromide; and alkylaluminum hydrides such as diethylaluminum hydride and diisobutylaluminum hydride.

Among them, trialkyl aluminums such as triethyl aluminum and triisobutyl aluminum are preferred.

When the transition metal catalyst component is a solid titanium catalyst component, the co-catalyst component (organometal compound catalyst component) is used in an amount capable of producing a polymer in an amount of usually from 0.1 to 1,000,000 g, preferably 100 to 1, 000, 000 g per 1 g of the solid titanium catalyst component, that is to say, in an amount of usually from 0.1 to 1000 mol, preferably about 0.5 to 500 mol, more preferably 1 to 200 mol per 1 mol of titanium atom in the solid titanium catalyst component.

It is preferred that the transition metal catalyst component be suspended in an inert organic solvent (preferably saturated aliphatic hydrocarbon) and fed to a polymerization reactor.

The transition metal catalyst component is preferably pre-polymerized with an α-olefin such as 3-methyl-1-pentene or 4-methyl-1-pentene and then used as the solid catalyst component. In the pre-polymerization, the α-olefin is polymerized in an amount of usually from 0.1 to 1000 g, preferably 0.3 to 500 g, more preferably 1 to 200 g per 1 g of the transition metal catalyst component. Furthermore, the pre-polymerization can be carried out with the catalyst having a higher concentration than that of the reaction system in the polymerization of 4-methyl-1-pentene.

In the production of poly-4-methyl-1-pentene (A), it is preferred to employ a liquid phase polymerization method such as solution polymerization and suspension polymerization (slurry polymerization), and further preferred to employ suspension polymerization (slurry polymerization).

At the time of the main polymerization, when hydrogen is used, it is possible to control the molecular weight of a resulting polymer and thereby a polymer having a high melt flow rate can be prepared.

Selecting the kind of the electro donor contained in the solid titanium catalyst used in the main polymerization, the stereo-regularity of a resulting polymer can be regulated and thereby the melting point of the polymer can be regulated.

In the present invention, the polymerization temperature and the polymerization pressure of the olefin are different according to the polymerization method and the kind of the monomer used in the polymerization. The polymerization temperature is set usually from 10 to 200°C, preferably 30 to 150°C and the polymerization pressure is set usually from ordinary pressure to 5 MPa-G, preferably from 0.05 to 4 MPa-G.

Polyamide (B)

The polyamide (B) used in the present invention is aliphatic polyamide or aromatic polyamide.

The aliphatic polyamide indicates polyamide having no aromatic ring in the molecular chain and essentially comprises amino carboxylic acid, lactam, diamine and dicarboxylic acid. In the present invention, the aliphatic polyamide may include alicyclic polyamide.

Examples of the amino carboxylic acid are 3-aminopropionic acid, 6-amino caproic acid, 7-amino heptanoic acid, 9-amino nonanoic acid, 11-amino undecanoic acid and 12-amino dodecanoic acid.

Examples of the lactam are α-pyrrolidone, ε-caprolactam, ω-laurolactam, ε-enantholactam and undecanelactam.

Examples of the diamine are aliphatic and alicyclic diamines such as tetramethylene diamine, hexamethylene diamine, 2-methylpentamethylene diamine, nonamethylene diamine, undecamethylene diamine, dodecamethylene diamine, 2,2,4-trimethylhexamethylene diamine, 2,4,4-trimethylhexamethylene diamine, 5-methyl nonamethylene diamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperadine and aminoethyl piperadine.

Examples of the dicarboxylic acid are aliphatic and alicyclic dicarboxylic acids such as oxalic acid, malonic acid, succinic acid, glutaric acid, adipic acid, pimelic acid, suberic acid, azelaic acid, sebacic acid, dodecanedioic acid, 1,4-cyclohexadicarboxylic acid and 5-norbornene-2,3-dicarboxylic acid.

Examples of the aliphatic polyamide resin comprising these monomer components are polycaproamide (polyamide 6; PA6), polyhexamethylene adipamide (polyamide 66; PA66), polyamide 610(PA610), polyamide 11 (PA11) and polyamide 12 (PA12). These may be a homopolymer or a copolymer of two or more polymers. Furthermore, the polyamide resins may be used singly or in a mixture with a polyamide resin polymerized from a different monomer.

The aromatic polyamide resin in the present invention is an aromatic polyamide resin containing at least one

aromatic monomer component, for example, a polyamide obtainable by using aliphatic dicarboxylic acid and aromatic diamine, aromatic dicarboxylic acid and aliphatic diamine, or aromatic dicarboxylic acid and aromatic diamine as raw materials and polycondensation thereof.

Examples of aliphatic diamine and aliphatic dicarboxylic acid as raw materials are as same as those as described above.

Examples of the aromatic diamine are methaxylene diamine and paraxylene diamine, and examples of the aromatic dicarboxylic acid are phthalic acid, terephthalic acid, isophthalic acid and naphthalene dicarboxylic acid.

Specific examples of aromatic polyamide are polyhexamethylene isophthalamide (Polyamide 6I), polyhexamethylene adipamide/ polyhexamethylene terephthalamide copolymer (Polyamide 66/6T), polyhexamethylene terephthalamide/polycaproamide copolymer (Polyamide 6T/6), polydecaamide/polyhexamethylene terephthalamide copolymer (Polyamide 12/6T), polyhexamethylene adipamide/polyhexamethylene terephthalamide/polyhexamethylene isophthalamide copolymer (Polyamide 66/6T/6I), polyhexamethylene adipamide/polycaproamide/ polyhexamethylene isophthalamide copolymer (Polyamide 66/6/6I), polyhexamethylene terephthalamide/polyhexamethylene isophthalamide copolymer (Polyamide 6T/6I), polyhexamethylene terephthalamide/poly(2-methylpentamethylene terephthalamide) copolymer (Polyamide 6T/M5T), poly-m-xylylene adipamide (Polyamide MXD6), and their mixtures and copolymerized resins.

Among them, it is preferred to use aliphatic polyamides such as polyamide 6 (nylon6), polyamide 66 (nylon66), polyamide 11 (nylon11), polyamide 12 (nylon12), polyamide 610 (nylon 610), nylon 6-66 copolymers in viewpoints such that they mostly have the melting points and viscosities near the values of poly-4-methyl-1-pentene (A), the resin composition is easily produced, and various molded articles having good physical properties such as injection molded articles, films and sheets can be prepared using the resin composition.

Polyamide (B) used in the present invention preferably satisfies the following necessary conditions (B-i) and (B-ii).

(B-i) The melt flow rate (MFR; ASTM D1238, 260°C, 5 Kgf) is usually from 1 to 500 g/10 min, preferably 2 to 100 g/10 min, more preferably 3 to 30 g/10 min. When the MFR is in the above range, the viscosity and fluidity of polyamide (B) agree with those of poly-4-methyl-1-pentene and thereby they are easily mixed. In results, the resin composition having good physical properties, films and sheets can be prepared.

(B-ii) The melting point (Tm) is usually from 150 to 300°C, preferably 160 to 290°C, more preferably 170 to 280°C.

The melting point is unfavorably lower than 150°C because the viscosity difference between poly-4-methyl-1-pentene and polyamide is large at the time of the production of the resin composition with melt kneading. The melting point is unfavorably higher than 300°C because poly-4-methyl-1-pentene causes thermal decomposition in such a condition capable of melt kneading polyamide.

<u>Modified poly-4-methyl-1-pentene (C)</u>

Modified poly-4-methyl-1-pentene (C) is obtainable by graft modifying poly-4-methyl-1-pentene (A) with an ethylenic unsaturated bond-containing monomer using an organo peroxide. Modified poly-4-methyl-1-pentene (C) preferably has at least one functional group capable of reacting with the reacting functional group (carboxyl group, amino group) of polyamide (B).

Examples of the functional group bonding to modified poly-4-methyl-1-pentene (C) are a halogen atom, a carboxyl group, an acid anhydride group, an epoxy group, a hydroxyl group, an amino group, an amide group, an imide group, an ester group, a alkoxysilane group, an acid halide group and a nitrile group. Particularly, as the functional group capable reacting with the reacting functional group of polyamide (B), the carboxyl group, the acid anhydride group and their derivatives are preferred because they have high reactivity with polyamide (B).

Modified poly-4-methyl-1-pentene (C) used in the present invention preferably satisfies the following necessary conditions (C-i) to (C-iii).

(C-i) The melting point (Tm) is usually from 200 to 240°C, preferably 210 to 235°C, more preferably 215 to 230°C. The kneading of modified poly-4-methyl-1-pentene (C), poly-4-methyl-1-pentene (A) and polyamide (B) is preferably carried out at a temperature not lower than the melting point of modified poly-4-methyl-1-pentene (C). When the kneading temperature is lower than 200°C, the kneading condition deteriorates and thereby the mechanical properties of the resulting poly-4-methyl-1-pentene resin composition such as tensile strength, tensile elongation are lowered. Therefore, the melting point of modified poly-4-methyl-1-pentene (C) is preferably not lower than the above lower limit. Although the upper limit differs with modified poly-4-methyl-1-pentene (C) used and thereby is not particularly limited, it is preferably not higher than 240°C because it is hardly melted as compared with poly-4-methyl-1-pentene (A) and polyamide (B) and thereby the kneading condition is deteriorated.

(C-ii) The grafted amount of the ethylenic unsaturated bond-containing monomer in modified poly-4-methyl-1-pentene (C) is usually from 0.1 to 10 % by weight, preferably 0.3 to 7% by weight, more preferably 0.5 to 5 % by weight based on 100 % by weight of modified poly-4-methyl-1-pentene (C). When the grafted amount of the ethylenic unsaturated bond containing monomer in modified poly-4-methyl-1-pentene (C) is less than 0. 1 % by weight, the reactivity with

polyamide (B) is lowered and thereby the mechanical properties of the poly-4-methyl-1-pentene resin composition, such as tensile strength and tensile elongation are lowered. While, when the grafted amount of the ethylenic unsaturated bond containing monomer in modified poly-4-methyl-1-pentene (C) is more than 20 % by weight, the reaction of modified poly-4-methyl-1-pentene (C) and polyamide (B) proceeds excessively and thereby crosslinking reaction proceeds and the molding properties of the resin composition may be hindered. The grafted amount can be determined by infrared spectroscopy (IR) or NMR.

(C-iii) the intrinsic viscosity [η] in decalin at 135°C is usually from 0.2 to 4 dl/g, preferably 0.3 to 2 dl/g. When the intrinsic viscosity [η] of modified poly-4-methyl-1-pentene (C) is less than 0.2 dl/g, the strength of modified poly-4-methyl-1-pentene (C) itself is lowered and thereby the mechanical properties of the poly-4-methyl-1-pentene resin composition such as tensile strength, tensile elongation may be lowered. When the intrinsic viscosity [η] is higher than 4 dl/g, the viscosity difference between poly-4-methyl-1-pentene (A) and polyamide (B) becomes large at the time of molding to cause molding failure of the poly-4-methyl-1-pentene resin composition.

Next, the production method of modified poly-4-methyl-1-pentene (C) is described.

<u>Poly-4-methyl-1-pentene</u>

In the present invention, examples of poly-4-methyl-1-pentene used as a raw material for modified poly-4-methyl-1-pentene (C) are not particularly limited, and may include commercially available ones.

Among them, it is preferred to use poly-4-methyl-1-pentene satisfying the properties defined in poly-4-methyl-1-pentene (A) in the viewpoint that the compatibilization between resulting modified poly-4-methyl-1-pentene (C) and poly-4-methyl-1-pentene (A) is favorably caused at the time of production of the poly-4-methyl-1-pentene resin composition.

<u>Ethylenic unsaturated bond-containing monomer</u>

The ethylenic unsaturated bond-containing monomer used in the present invention is a compound having both of a radical polymerizable ethylenic unsaturated bond and at least one functional group in one molecule. Examples of the functional group are a halogen atom, a carboxyl group, an acid anhydride group, an epoxy group, a hydroxyl group, an amino group, an amide group, an imide group, an ester group, an alkoxy silane group, an acid hydride, an aromatic ring and a nitrile group. Furthermore, the ethylenic unsaturated bond is preferably a hydrocarbon group having an ethylenic unsaturated bond, and examples thereof are an alkylene group such as an ethylene group, a propylene group, an isopropylene group, a butylene group, an isobutylene group, a pentylene group, a hexylene group, a heptylene group and an octylene group.

Examples of the ethylenic unsaturated bond-containing monomer are unsaturated carboxylic acids and their derivatives (such as acid anhydride, acid amide, ester, acid halide and metal salt), imide, a hydroxyl group-containing ethylenic unsaturated compound, an epoxy group-containing ethylenic unsaturated compound, a styrene-type monomer, acrylonitrile, vinyl acetate and vinyl chloride. Preferable examples thereof are unsaturated carboxylic acids and their derivatives, a hydroxyl group-containing ethylenic unsaturated compound and an epoxy group-containing ethylenic unsaturated compound. These ethylenic unsaturated bond-containing monomers may be used singly or two or more may be combined for use.

Examples of the unsaturated carboxylic acids and their derivatives are unsaturated carboxylic acids and their anhydrides such as (meth)acrylic acid, α-ethyl acrylic acid, maleic acid, fumaric acid, tetrahydrophthalic acid, methyl tetrahydrophthalic acid, citraconic acid, crotonic acid, isocrotonic acid, endocis-bicyclo[2.2.1]hepto-2,3- dicarboxylic acid (nadic acid Trade Mark), anhydrous nadic acid and methyl-endocis-bicyclo [2.2.1]hepto-5-ene-2,3- dicarboxylic acid (methyl nadic acid Trade Mark); an unsaturated carboxylic acid ester such as methyl (meth)acrylate; an unsaturated carboxylic acid halide; an unsaturated carboxylic amide and an unsaturated carboxylic imide. Preferable examples are malonyl chloride, maleimide, anhydrous maleic acid, anhydrous citraconic acid, anhydrous nadic acid, (meth) acrylic acid, nadic acid, maleic acid, monomethyl maleate, dimethyl maleate and methyl methacrylate. More preferable examples are (meth)acrylic acid, maleic acid, nadic acid, anhydrous maleic acid, anhydrous nadic acid and methyl methacrylate. The unsaturated carboxylic acids and their derivatives may be used singly or two or more may be combined for use.

Examples of the hydroxyl group-containing ethylenic unsaturated compound are 2-hydroxymethyl(meth)acrylate, 2-hydroxyethyl(meth)acrylate, 2-hydroxypropyl(meth)acrylate, 3-hydroxypropyl(meth)acrylate,
2-hydroxy-3-phenoxypropyl(meth)acrylate,
3-chloro-2-hydroxypropyl(meth)acrylate, glycerin mono(meth)acrylate, pentaerythritol mono(meth)acrylate, trimethylolpropane (meth)acrylate, tetramethylolethane mono(meth)acrylate, butanediol mono(meth)acrylate, polyethyleneglycol mono(meth)acrylate and 2-(6-hydroxyhexanoyloxy) ethylacrylate;
10-undecen-1-ol, 1-octen-3-ol, 2-methylol norbornene, hydroxystyrene, hydroxyethylvinylether, hydroxybutylvinylether, N-methylol(meth)acrylamide, 2-(meth)acryloyloxyethyl acid phosphate, glycerin monoallylether, allyl alcohol, allyloxyethanol and 2-butene-1, 4-diol; and glycerin monoalcohol. Preferable examples are 10-undecen-1-ol, 1-octen-3-ol, 2-methanol norbornene, 2-hydroxyethyl(meth)acrylate, 2-hydroxypropyl(meth)acrylate, hydroxystyrene, hydroxyethylvinylether, hydroxybutylvinylether, N-methylol(meth)acrylamide, 2-(meth)acryloyloxyethyl acid phosphate, glycerin monoallylether, allyl alcohol, allyloxyethanol, 2-butene-1,4-diol and glycerin monoalcohol. More preferable examples are 2-hydroxyethyl(meth)acrylate and 2-hydroxypropyl(meth)acrylate. The hydroxyl group-containing ethylenic unsaturated compounds may be used singly or two or more may be combined for use.

Examples of the epoxy group-containing ethylenic unsaturated compound are an unsaturated glycidyl ester represented by the following formula (I), an unsaturated glycidyl ether represented by the following formula (II) and an epoxy alkene represented by the following formula (III).

[Chemical formula 1]

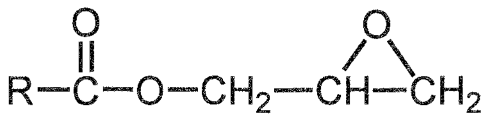

· · · (I)

In the formula (I), R is a hydrocarbon group having a polymerizable ethylenic unsaturated bond.

[Chemical formula 2]

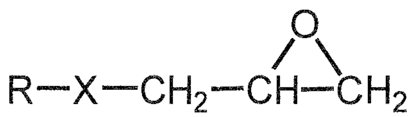

· · · (II)

In the formula (II), R is a hydrocarbon group having a polymerizable ethylenic unsaturated bond, and X is a bivalent group represented by $-CH_2-O-$ or $-C_6H_4-O-$.

[Chemical formula 3]

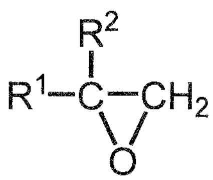

· · · (III)

In the formula (III), $R^1$ is a hydrocarbon group having a polymerizable ethylenic unsaturated bond, and $R^2$ is hydrogen or a methyl group.

Examples of the epoxy group-containing ethylenic unsaturated compound are glycidyl (meth)acrylate, mono or diglycidyl ester of itaconic acid, mono, di or triglycidyl ester of butene tricarboxylic acid, mono or diglycidyl ester of tetraconic acid, mono or diglycidyl ester of nadic acid (Trade Name), mono or diglycidyl ester of methyl nadic acid (Trade Name), mono or diglycidyl ester of allyl succinic acid, glycidyl ester of p-styrene carboxylic acid, allylglycidylether, 2-methylallylglycidylether, styrene-p-glycidylether, 3,4-epoxy-1-butene, 3,4-epoxy-3-methyl-1-butene, 3,4-epoxy-1-pentene, 3,4-epoxy-3-methyl-1-pentene, 5,5-epoxy-1-hexene and vinylcyclohexene monoxide, preferably glycidyl acrylate and glycidyl methacrylate. The epoxy group-containing ethylenic unsaturated compounds may be used singly or two or more may be combined for use.

Among the ethylenic unsaturated bond containing monomers, unsaturated carboxylic acids or their derivatives are more preferred, unsaturated carboxylic acid anhydrides are particularly preferred, and anhydrous maleic acid is most preferred because of having high reactivity with an amino group present at the end of polyamide.

Organic peroxide

As the organic peroxide used in the present invention, known ones can be used without particular limitation as

far as the ethylenic unsaturated bond-containing monomer can be graft modified on poly-4-methyl-1-pentene.

Examples of the organic peroxide used in the present invention are peroxy ketals such as 1,1-bis(t-butylperoxy)-3,3,5-trimethylcyclohexane, 1,1-bis(t-butylperoxy)cyclohexane,
2,2-bis(t-butylperoxy)octane,
n-butyl-4,4-bis(t-butylperoxy)valerate and 2,2-bis(t-butylperoxy)butane;
dialkyl peroxides such as di-t-butyl peroxide, dicumyl peroxide, t-butylcumyl peroxide, $\alpha,\alpha'$-bis(t-butylperoxy)diisopropyl benzene, 2,5-dimethyl-2,5-bis(t-butylperoxy)hexane and 2,5-dimethyl-2,5-bis(t-butylperoxy)hexyne-3;
diacyl peroxides such as acetyl peroxide, isobutyl peroxide, octanoyl peroxide, dodecanoyl peroxide, lauroyl peroxide, 3,5,5-trimethylhexanoyl peroxide, benzoyl peroxide, 2,5-dichlorobenzoyl peroxide and m-trioyl peroxide;
peroxy esters such as t-butyloxy acetate (sic t-butylperoxy acetate), t-butylperoxy isobutylate, t-butylperoxy-2-ethylhexanoate, t-butylperoxy laurate, t-butylperoxy benzoate, di-t-butylperoxy isophthalate, 2,5-dimethyl-2,5-bis(benzoylperoxy)hexane, t-butylperoxy maleic acid, t-butylperoxyisopropyl carbonate and cumyl peroxyoctoate;
peroxy dicarbonates such as di(2-ethylhexyl)peroxy dicarbonate and di(3-methyl-3-methoxybutyl)peroxy dicarbonate; and
hydroperoxides such as t-butyl hydroperoxide, cumene hydroperoxide, diisopropylbenzene hydroperoxide, 2,5-dimethylhexane-2,5-dihydroperoxide and 1,1,3,3-tetramethylbutyl hydroperoxide. Preferable examples are t-butylperoxy benzoate, 2,5-dimethyl-2,5-bis(t-butylperoxy)hexane,
2,5-dimethyl-2,5-bis(t-butylperoxy)hexyne-3,
t-butylperoxy-2-ethylhexanoate and dicumyl peroxide.

Production process of modified poly-4-methyl-1-pentene (C)

Modified poly-4-methyl-1-pentene (C) is produced by graft modification of poly-4-methyl-1-pentene, the ethylenic unsaturated bond containing monomer and the organic peroxide in heating conditions. The modification reaction may be carried out in the presence or absence of a solvent.

In carrying out the graft modification in the presence of the solvent, examples of the solvent are aliphatic hydrocarbons such as hexane, heptanes, octane, decane, dodecane, tetradecane and kerosene; alicyclic hydrocarbons such as methyl cyclopentane, cyclohexane, methylcyclohexane, cyclooctane and cyclododecane; aromatic hydrocarbons such as benzene, toluene, xylene, ethyl benzene, cumene, ethyl toluene, trimethyl benzene, cymene and diisopropyl benzene; and halogenated hydrocarbons such as chlorobenzene, bromobenzene, o-dichlorobenzene, carbon tetrachloride, trichloroethane, trichloroethylene, tetrachloroethane and tetrachloroethylene.

In the modification reaction in the presence of the solvent, the temperature, which is not particularly limited, is usually from 50 to 300°C, preferably 60 to 290°C. The time of the modification reaction, which is not particularly limited, is usually from 1 min to 10 min, preferably 2 min to 9 min. The modification reaction can be carried out at ordinary pressure or under pressure. In the reaction, the ethylenic unsaturated bond-containing monomer is fed in an amount, which is not particularly limited, of usually 0.2 to 100 parts by weight, preferably 0.5 to 50 parts by weight based on 100 parts by weight of poly-4-methyl-1-pentene.

In the modification reaction in the absence of the solvent, the modification reaction is preferably carried out in a molten state with kneading.

An example thereof is a method such that the resins, or the resins and the solid or liquid additives are mixed by Henschel mixer, a ribbon blender or a blender to prepare a uniform mixer, and the mixture is kneaded. In the kneading, a Banbury mixture, a Plastomill, a Brabender plastograph, or a monoaxial or biaxial extruder is used.

As the method of modifying poly-4-methyl-1-pentene, there is a preferable method of feeding poly-4-methyl-1-pentene, the ethylenic unsaturated bond-containing monomer and/or its derivative and the organic peroxide, which have been premixed sufficiently, from a feeding port of a monoaxial or biaxial extruder and kneading. Using the modification method, continuous production can be attained and thereby the productivity is improved.

In kneading, the temperature of a cylinder of a kneader, which is not particularly limited, is usually from 200 to 300°C, preferably 220 to 290°C. When the temperature is not higher than 200°C, the grafted amount of modified poly-4-methyl-1-pentene (C) is not improved occasionally, while when it is not lower than 300°C, poly-4-methyl-1-pentene occasionally decomposes. The kneading time, which is not particularly limited, is usually from 0.1 to 30 min, preferably 0.5 to 5 min. When the kneading time is less than 0.1 min, a sufficient grafted amount is not obtained occasionally, while when it is over 30 min, modified poly-4-methyl-1-pentene (C) occasionally decomposes.

In the process of producing modified poly-4-methyl-1-pentene (C) by melt kneading, the ethylenic unsaturated bond-containing monomer is used in an amount of usually 0.1 to 20 parts by weight, preferably 0.3 to 10 parts by weight, more preferably 0.5 to 5 parts by weight and the organic peroxide is used in an amount of usually 0.001 to 10 parts by weight, preferably 0.005 to 5 parts by weight, more preferably 0.01 to 4 parts by weight based on 100 parts by weight of poly-4-methyl-1-pentene (A).

Modified poly-4-methyl-1-pentene (C) thus prepared has a carboxyl group and an acid anhydride group or

derivatives thereof, an epoxy group, a hydroxyl group, an amino group, an amide group, an imide group, an ester group, an alkoxysilane group, an acid halide group, an aromatic ring and a nitrile group, preferably a carboxyl group and an acid anhydride group or derivatives thereof, an amide group, an ester group and an acid halide group, more preferably a carboxyl group, an acid anhydride, an amide group, an ester group and an acid halide group according to the used ethylenic unsaturated bond-containing monomer.

Content of each component of poly-4-methyl-1-pentene resin composition

The poly-4-methyl-1-pentene resin composition comprised in the film of the present invention comprises modified poly-4-methyl-1-pentene (C) in a specific amount based on 100 parts by weight of the total amount of the poly-4-methyl-1-pentene (A) and polyamide (B).

The lower limit of the content of poly-4-methyl-1-pentene (A) ((A)/((A) + (B))) shown in the tables later) is usually 50 parts by weight, preferably over 50 parts by weight, more preferably 53 parts by weight, furthermore preferably 55 parts by weight, particularly preferably 58 parts by weight based on 100 parts by weight of the total of poly-4-methyl-1-pentene (A) and polyamide (B). The upper limit of the content of poly-4-methyl-1-pentene (A) is usually 99 parts by weight, preferably 98 parts by weight, furthermore preferably 95 parts by weight, particularly preferably 92 parts by weight.

When the content of poly-4-methyl-1-pentene (A) is less than 50 parts by weight, a resultant resin composition difficultly exhibits release properties which are inherent in poly-4-methyl-1-pentene. When the content of the poly-4-methyl-1-pentene (A) is over 99 parts by weight, the contents of polyamide resin (B) and modified poly-4-methyl-1-pentene (C) are decreased. When a molded article such as a film is formed using such a resin composition, sufficient strength cannot be obtained and the molding properties such as stretching properties and the like are not improved.

The lower limit of the content of polyamide (B) in the resin composition ((B)/((A) + (B))) shown in the tables later) is usually 1 part by weight, preferably 2 parts by weight, more preferably 5 parts by weight, particularly preferably 8 parts by weight based on 100 parts by weight of the total of poly-4-methyl-1-penten (A) and polyamide (B). The upper limit of the content of polyamide (B) is usually 50 parts by weight, preferably less than 50 parts by weight, more preferably 47 parts by weight, furthermore preferably 45 parts by weight, particularly preferably 42 parts by weight.

When the content of polyamide (B) is lower than 1 part by weight, the strength of a molded article, for example, a film prepared from the resin composition is not improved and the molding properties such as stretching properties and the like are not improved. When it is over 50 parts by weight, the release properties of the resin composition which are inherent in poly-4-methyl-1-pentene become worse.

The lower limit of the content of modified poly-4-methyl-1-pentene (C) ((C)/((A) + (B))) shown in the tables later) is usually 0.1 part by weight, preferably 1 part by weight, more preferably 2 parts by weight, particularly preferably 3 parts by weight based on 100 parts by weight of the total of poly-4-methyl-1-pentene (A) and polyamide (B). The upper limit of the content of modified poly-4-methyl-1-pentene (C) is usually 30 parts by weight, preferably 27 parts by weight, furthermore preferably 25 parts by weight, particularly preferably 22 parts by weight.

When the content of modified poly-4-methyl-1-pentene (C) is over 30 parts by weight, the content of polyamide (B) is relatively lowered and the mechanical properties of a molded article which are the characteristics of the present invention are not improved. Furthermore, the surface tension is increased by un-reacted modified poly-4-methyl-1-pentene (C) and it is possible that the release properties are deteriorated.

When the content of modified poly-4-methyl-1-pentene (C) is in the above range, the compatibilization of poly-4-methyl-1-pentene (A) and polyamide (B) is proceeded moderately and thereby a resulting resin composition has release properties which are inherent in poly-4-methyl-1-pentene, and the mechanical properties of a molded article formed from the resin composition are improved and also the molding properties such as stretching properties can be improved.

As shown in Table 1, it is clear that the melt tension of the poly-4-methyl-1-pentene resin composition comprised in the film of the present invention contains a definite amount of modified poly-4-methyl-1-pentene (C) and thereby it shows a convex curved line according to the addition amount of polyamide (B) against the additive property of the melt tension of poly-4-methyl-1-pentene (A) and polyamide (B). The poly-4-methyl-1-pentene resin composition comprised in the film of the present invention has a unique property on melt tension as compared with a normal resin composition that the melt tension takes additive property or shows a line lower than the melt tension sum of poly-4-methyl-1-pentene (A) and polyamide (B). It is presumed that this is caused by the presence of modified poly-4-methyl-1-pentene (C). More specifically, it is presumed that modified poly-4-methyl-1-pentene (C) and polyamide (B) are reacted to prepare a block polymer having a high molecular weight, and the compatibility between poly-4-methyl-1-pentene (A) and polyamide (B) is improved by the presence of the block polymer having a high molecular weight and thereby the melt tension is increased.

Moreover, from the comparison with the examples and comparative examples as described later, the content of polyamide (B) is particularly preferably 10 to 40 parts by weight based on 100 parts by weight of the total of poly-4-methyl-1-pentene (A) and polyamide (B) in consideration of film forming properties, release properties, stretching properties and inflation molding properties. The content of modified poly-4-methyl-1-pentene (C) is preferably 3 to 22 parts

by weight based on 100 parts by weight of the resin composition.

The poly-4-methyl-1-pentene resin composition comprised in the film of the present invention comprises the following amounts of poly-4-methyl-1-pentene (A), polyamide (B) and modified poly-4-methyl-1-pentene (C) based on 100 parts by weight of the total amount of the components (A), (B) and (C).

The content of poly-4-methyl-1-pentene (A) is from 40 to 99 parts by weight, preferably 45 to 98 parts by weight, more preferably 50 to 95 parts by weight. When the content of poly-4-methyl-1-pentene (A) is less than 40 parts by weight, a resulting resin composition difficultly exhibits release properties which are inherent in poly-4-methyl-1-pentene. When the content of the thermoplastic resin (A) (sic poly-4-methyl-1-pentene (A)) is over 99 parts by weight, the contents of polyamide resin (B) and modified poly-4-methyl-1-pentene (C) are decreased. When a molded article such as a film is formed using such a resin composition, sufficient strength cannot be obtained and the molding properties such as stretching properties and the like are not improved.

The content of polyamide (B) is from 1 to 60 parts by weight, preferably 2 to 50 parts by weight, more preferably 5 to 50 parts by weight. When the content of polyamide (B) is lower than 1 part by weight, the strength of a molded article, for example, a film prepared from the resin composition is not improved and the molding properties such as stretching properties and the like are not improved. When it is over 60 parts by weight, the release properties of the resin composition which are inherent in poly-4-methyl-1-pentene become worse.

The content of modified poly-4-methyl-1-pentene (C) is from 0.1 to 20 parts by weight, preferably 1 to 18 parts by weight, more preferably 2 to 15 parts by weight. When the content of modified poly-4-methyl-1-pentene (C) is in the above range, a resulting resin composition has release properties which are inherent in poly-4-methyl-1-pentene, and the mechanical properties of a molded article formed from the resin composition are improved and also the molding properties such as stretching properties and the like can be improved.

<u>Other components</u>

To the poly-4-methyl-1-pentene resin composition, it is possible to add additives for resins optionally without marring the effect. Examples of the additives for resins are a pigment, a dye, a filler, a lubricant, a plasticizer, a releasing agent, an antioxidant, a flame retardant, a ultraviolet absorber, an anti-fungus agent, a surface active agent, an antistatic agent, a weather stabilizer, a heat stabilizer, an anti-slipping, an anti-blocking agent, a foaming agent, a crystallization assistant, an anti-fogging agent, a (transparent) nucleating agent, an antioxidant, a hydrochloric acid-absorbent, an impact improver, a crosslinking agent, a co-crosslinking agent, a crosslinking assistant, a binder, a softening agent and a processing assistant. These additives may be used singly or two or more may be properly combined for use.

Examples of the pigment may include an inorganic pigment such as titanium oxide, iron oxide, chromium oxide and cadmium sulfide, and an organic pigment such as azolake, thioindigo, phthalocyanine and anthraquinone types. Examples of the dye may include azo, anthraquinone and triphenylmethane dyes. These pigments and the dyes are added in an amount, which is not particularly limited, of not more than 5 % by weight, preferably 0.1 to 3 % by weight based on the total amount of the poly-4-methyl-1-pentene resin composition formed from the components (A) to (C).

Examples of the filler may include glass fiber, carbon fiber, silica fiber, a metal fiber such as stainless steel, aluminum, titanium and copper, carbon black, silica, glass beads, a silicate such as calcium silicate, talc and clay, a metal oxide such as iron oxide, titanium oxide and alumina, a metal carbonate such as calcium sulfate and barium sulfate, and various metal powders such as magnesium powder, silicon powder, aluminum powder, titanium powder and copper powder, mica and glass flake. These fillers may be used singly or two or more may be combined for use.

Examples of the lubricant may include a wax such as carnauba wax, a higher aliphatic acid such as stearic acid, a higher alcohol such as stearyl alcohol, and a higher fatty acid amide such as stearic acid amide.

Examples of the plasticizer may include an aromatic carboxylic acid ester such as dibutyl phthalate, an aliphatic carboxylic acid ester such as methyl acetyl ricinoleate, an aliphatic dicarboxylic acid ester such as adipic acid-propylene glycol polyester, an aliphatic tricarboxylic acid ester such as triethyl citrate, a triphosphate such as triphenyl phosphate, an epoxy aliphatic acid ester such as epoxy butyl stearic acid, and a petroleum resin.

Examples of the releasing agent may include lower (C1- 4) alcohol esters of higher aliphatic acid such as butyl stearate, polyvalent alcohol esters of aliphatic acid (C4-30) such as hardened castor oil, glycol ester of aliphatic acid and fluid paraffin.

Examples of the antioxidant may include a phenol type antioxidant such as 2,6-di-t-butyl-4-methylphenol, a polycyclic phenol type antioxidant such as 2,2'-methylene bis(4-methyl-6-t-butylphenol), a phosphorus type antioxidant such as tetrakis(2,4-di-t-butylphenyl)-4,4-biphenylene diphosphonate, an amine type antioxidant such as N,N-diisopropyl-p-phenylene diamine.

Examples of the flame retardant are an organic flame retardant such as nitrogen containing, sulfur containing, silicon containing, phosphorus containing flame retardants, and an inorganic flame retardant such as antimony trioxide, magnesium hydroxide, zinc borate and red phosphorus.

Examples of the ultraviolet ray absorbent may include benzotriazole, benzophenone, salicylic acid and acrylate

type ultraviolet ray absorbents.

Examples of the anti-fungus agent are quaternary ammonium salt, a pyridine compound, an organic acid, an organic acid ester, halogenated phenol and organic iodine.

Examples of the surface active agent are non-ionic, anionic, cationic and amphoteric surface active agents. Examples of the non-ionic surface active agent may include a polyethylene glycol type non-ion surface active agent such as higher alcohol ethylene oxide additive, aliphatic acid ethylene oxide additive, higher alkyl amine ethylene oxide additive and polypropylene glycol ethylene oxide additive; and a polyvalent alcohol type non-ionic surface active agent such as aliphatic acid ester of polyethylene oxide or glycerin, aliphatic acid ester of pentaerythritol, aliphatic acid ester of sorbitol or sorbitan, alkyl ether of polyvalent alcohol and aliphatic amide of alkanolamine. Examples of the anionic surface active agent may include a sulfate ester salt such as alkali metal salt of higher aliphatic acid, a sulfonic acid salt such as alkyl benzene sulfonate, alkyl sulfonate and paraffin sulfonate, and a phosphoric acid ester salt such as higher alcohol phosphoric acid ester salt. Examples of the cationic surface active agent may include a quaternary ammonium salt such as alkyl trimethyl ammonium salt and the like. Examples of the amphoteric surface active agent may include an amino acid type amphoteric surface active agent such as higher alkylamino propionic acid salt, and a betaine type amphoteric surface active agent such as higher alkyl dimethyl betaine and higher alkyl dihydroxyethyl betaine.

Examples of the antistatic agent may include the above surface active agent, an aliphatic acid ester and a polymer type antistatic agent. Examples of the aliphatic acid ester may include esters of stearic acid and oleic acid. An example of the polymer type antistatic agent is polyether ester amide.

The various additives such as the filler, the lubricant, the plasticizer, the releasing agent, the antioxidant, the flame retardant, the ultraviolet absorber, the anti-fungus agent, the surface active agent and the antistatic agent, are preferably added in an amount, which is not particularly limited, of 0.1 to 30 % by weight based on the total weight of the resin composition formed from the components (A) to (C) in accordance with the use within not marring the object of the present invention.

Process for producing poly-4-methyl-1-pentene resin composition

The process for producing the poly-4-methyl-1-pentene resin composition is not particularly limited. For example, poly-4-methyl-1-pentene (A), polyamide (B), modified poly-4-methyl-1-pentene (C) and other optional components are mixed in the above addition proportion and melt-kneaded.

The method of melt-kneading is not particularly limited, and the melt kneading can be carried out using a commercially available melt-kneading device such as an extruder and the like.

In carrying out kneading by a kneading device, the cylinder temperature is usually from 220 to 300°C, preferably 250 to 290°C. When the temperature is lower than 220°C, the reactivity between modified poly-4-methyl-1-pentene (C) and polyamide (B) is lowered and the kneading is insufficient so that the physical properties of the resin composition is not improved. While, when it is higher than 300°C, thermal decomposition of poly-4-methyl-1-pentene (A) is occasionally caused. The kneading time is usually from 0.1 to 30 min, preferably 0.5 to 5 min. When the kneading time is less than 0.1 min, a sufficient grafted amount is not occasionally obtained, while when it is over 30 min, thermal decomposition of modified poly-4-methyl-1-pentene (C) is occasionally caused.

Various molded articles formed from poly-4-methyl-1-pentene resin composition

Examples of the various molded articles according to the present invention formed from the poly-4-methyl-1-pentene resin composition are extrusion molded films and sheets, injection molded articles, stretching molded articles, inflation molded articles and lamination molded articles and blow molded articles.

These molded articles can be produced by the following methods.

(1) Extrusion molded films and extrusion molded sheets

The resin composition is molded by a general T die extrusion molding machine to prepare an extrusion molded film or extrusion molded sheet. Specifically, the resin composition is molded at the prescribed cylinder temperature of usually 250 to 300°C at the prescribed cast roll temperature of usually 0 to 50°C by a monoaxial extruder to form an extrusion molded film or sheet.

In the case of using as a release film, the extrusion molded film or sheet obtainable by molding the resin composition has a thickness, which depends on the use, of usually 5 to 1000 μm, preferably 50 to 100 μm, because the film productivity is excellent, no pinhole is caused at the time of film molding and sufficient strength can be obtained. Multi-layered films may be formed by the resin composition together with other resins. Multi-layered films may be formed by a co-extrusion molding method, an extrusion laminate method, a thermal laminate method or a dry laminate method. Furthermore, the film surface may be subjected to embossing, or may be stretched at the time of film molding or after

molding. The resulting film thus molded may be subjected to annealing treatment at a temperature lower than the melting point of the resin.

(2) Injection molded articles

The resin composition in a pellet state is softened with melting and filled in a mold at a molding temperature of usually 250 to 300°C at a molding cycle of usually 20 to 120 sec to prepare an injection molded article.

The injection molded article thus prepared from the resin composition under the above conditions has more excellent mechanical properties such as impact resistance, strength and creep properties as compared with a resin composition which comprises only poly-4-methyl-1-pentene (A) and polyamide (B). The molded article has an Izod impact strength of not less than 50 J/m occasionally, and thereby can be applied to structural members such as home electrical appliances, OA housing part fields, automobile material fields and other fields, although poly-4-methyl-1-pentene (A) has been practically insufficient for these fields.

(3) Stretching molded articles

The stretching molded article formed from the resin composition is prepared by producing a raw sheet and stretching it. The method of producing the raw sheet is not limited particularly, and examples thereof may include press molding, extrusion molding, inflation molding and a known method such as solvent casting.

From the viewpoint of improving the production efficiency, the extrusion molding method, inflation molding method and solvent casting method may be used. From the viewpoint of the production efficiency of a stretching molded article and stability, it is preferred to prepare a stretching molded article by subjecting a raw sheet formed by the melt extrusion molding method to stretching orientation.

In carrying out melt extrusion molding, a raw sheet is formed by molding at the prescribed cylinder temperature and at the prescribed cast roll temperature using a monoaxial extruder. In preparing a raw sheet by melt extrusion molding, the raw sheet is compressed with pressure between rolls of an extruder and thereby the transparency of a resulting sheet can be more enhanced. A raw sheet produced by melt extrusion molding may be submitted to a stretching molding device, or melt extrusion molding and stretching molding may be carried out successively.

The raw sheet thus formed is molded with stretching at the prescribed stretching rate by a stretching machine. The stretching may be carried out by any one of monoaxial stretching, biaxial stretching and successive stretching.

The stretching temperature is usually from the glass transition point (Tg) of a resin to 200°C, preferably Tg to 180°C, more preferably Tg to 150°C. In order to improve the stretching properties, it is preferred to pre-heat the raw sheet before stretching. It is sufficient that the pre-heating before stretching is usually carried out at a temperature of usually Tg to 180°C, more preferably Tg to 150°C for about 5 min.

The stretching rate is usually from 0.1 mm/sec to 500 mm/sec, more preferably 0.5 mm/sec to 100 mm/sec. The stretching magnification is usually 1.5 to 6 times, preferably 2 to 5 times. In order that the crystallization or crystal size is not increased, there is a preferable case of decreasing the stretching magnification and increasing the stretching rate. The stretching direction is preferably a direction of extruding the raw sheet. When the stretching is carried out under these conditions, a stretching molded article can be efficiently produced without occurrence of uneven stretching or broken stretching.

A film having mechanical strength can be prepared by stretching the film. The thickness of the stretching molded article can be regulated by changing the thickness of the raw sheet or the stretching magnification. The thickness of the stretching molded article has no upper limit particularly and may include those of sheets which are used in conventional technical fields. Furthermore, when the stretching molded article is used an optical film, it has a thickness usable for the optical uses. The thickness of the stretching molded article is usually from 10 to 200 μm, preferably 20 to 200 μm. When the stretching molded article has a thickness in the above range, the productivity of the film is more improved, pinhole and the like are not caused at the time of film molding and the film has sufficient mechanical strength.

(4) Inflation molded articles

As inflation molded articles formed from the resin composition, for example, an inflation film can be prepared using a monoaxial extruder by extruding the resin composition in an upward direction opposite to the weight direction from a die for inflation at the prescribed cylinder temperature.

The blow-up rate is usually 0.5 to 10, preferably 1 to 5. The take-up rate of the inflation film is usually from 1 to 40 m/min, preferably 2 to 30 m/min, more preferably 4 to 30 m/min. The thickness of the film, which is not limited particularly, is usually 10 to 300 μm, preferably 20 to 250 μm, more preferably 30 to 60 μm.

Because of having low melt tension, poly-4-methyl-1-pentene has problems such that the bubble stability is low at the time of inflation molding or blow molding, and the definite blow-up ratio cannot be kept during inflation molding.

Furthermore, polyamide has not so high melt tension and the molding temperature capable of carrying out inflation molding is limited to be near the melting point.

From the resin composition, the reactant of modified poly-4-methyl-1-pentene and polyamine is present and a high molecular weight block polymer is prepared, and as the high molecular weight block polymer is present, the compatibility between poly-4-methyl-l-pentene and polyamide is improved and the melt tension can be improved.

Moreover, from the improvement of melt tension, the stability of the film is improved at the time of inflation molding and thereby the inflation film having a uniform width can be prepared.

The inflation film of the present invention may be submitted to lamination inflation molding such that the inflation film is extruded together with other thermoplastic resins simultaneously.

(5) Lamination molded articles

Lamination molded articles are prepared by the following methods. Examples thereof are a method of laminating the film or sheet prepared by the method of extrusion molding in (1) together with a substrate by means of an adhesive or heat, an extrusion lamination method of extruding a melt resin through a T die on a substrate such as paper, metal or plastic directly by the same method as the method of extrusion molding in (1), a method of co-extrusion method of melting each of the resin composition and other components of the present invention by each extruder and then joining by a die head and extruding simultaneously and a method of combining these methods i.e. co-extrusion lamination.

In the present invention, it is preferred to use the co-extrusion lamination method of melting each of the resin composition and other components of the present invention by each extruder and then joining by a die head and extruding simultaneously.

Examples of the laminate molded articles may include a two-layered film which comprises a layer (I) of the poly-4-methyl-1-pentene resin composition and a layer (II) composed of a thermoplastic resin such as polyamide or polypropylene, a three-layered film which comprises the two-layered film and an adhesive layer (III) composed of modified poly-4-methyl-1-pentene or modified polypropylene between the two-layered film, a three-layered film which comprises a layer composed of the poly-4-methyl-1-pentene resin composition as the outer layer and a layer composed of a thermoplastic resin such as polyamide or polypropylene as an intermediate layer, and a three-layered film which comprises a layer (I), a layer (II) composed of the poly-4-methyl-1-pentene resin composition different from the layer (I) and a layer (III) composed of a thermoplastic resin such as polyamide or polypropylene.

In producing a release film, the release film preferably has a laminated structure such that a layer formed from the poly-4-methyl-1-pentene resin composition is an outer layer.

The polyamide layer can be prepared by using known polyamide according to the use without marring the effect of the present invention. Examples of polyamide may include polyamide 4 6 (PA46), polynonane methylene terephthalamide (polyamide 9T) and polyhexamethylene terephthalamide (polyamide 6T) in addition to the polyamide (B). These polyamides may be used singly or two or more may be properly combined for use.

With regard to the method of producing a laminate, the laminate is produced by melting each component with each monoaxial extruder at the prescribed cylinder temperature of usually 250 to 300°C, joining by means of a die head and molding at the prescribed cast roll temperature of usually 0 to 50°C.

The laminates obtainable by molding the poly-4-methyl-l-pentene resin composition have a thickness, depending to the use thereof, of usually 5 to 1000 μm, preferably 50 to 100 μm. They have excellent film productivity, no pinhole is caused at the time of film molding and the sufficient strength thereof is obtained.

In the present invention, in order to prepare a laminate having improved release properties and adhesive strength, it is preferred to increase the addition amount of modified poly-4-methyl-1-pentene in the resin composition as the layer composed of the resin composition and melt kneading with an extruder. Furthermore, in the production of the resin composition, the addition amount of modified poly-4-methyl-1-pentene may be increased, and added and kneaded for preparing the layer composed of the poly-4-methyl-1-pentene resin composition.

(6) Blow molded articles (Injection blow molding, stretching blow molding, direct blow molding)

For example, in injection blow molding, pellets of the poly-4-methyl-1-pentene resin composition are melted by a usual injection blow molding machine and filled in a mold to prepare a pre-molded article. The pre-molded article is heated again in an oven (heating furnace) and then put in a mold kept at a definite temperature, and blown by sending air with pressure to form a blow bottle.

Uses

Various poly-4-methyl-1-pentene resin compositions can be molded by the above various molding processing methods, and can be used to various uses such as automobile parts, home electrical appliance parts, electric and

electronic parts, building materials, civil engineering materials, agriculture materials, daily necessaries, various films, breathable films or sheets, foamed articles suitable for general industrial uses and recreation uses, strings, textiles, medical or sanitary materials , which are not limited particularly.

For example, the film molded articles can be used to peel-off films, protective films, optical films, optical compensation films, liquid crystal reflection films, polarizing films, liquid crystal displays, EL displays, freshness-keeping films, films for dishes, bags for keeping platelets, bags for keeping cells and the like. Particularly, the stretching molded articles (preferably stretching molded films) have uniformity of thickness and more excellent mechanical strength as compared with un-stretched molded articles. The film molded articles can be also favorably used to release films for printing substrates which need to have strength, release films for thermosetting resins, sealing films for semiconductor production, papers for synthetic skins, baking cartons, wrapping materials for fruits and vegetables, various films for medical care or dishes, bags for keeping platelets, bags for keeping cells, sheets for mediums of microorganism detection, bags for sterilization step which needs to have instant heat resistance and bottles for agricultural chemicals and cosmetics. The injection molded articles are used to housing parts such as personal computers, cellular phones and the like, and parts that resin parts have been used such as front doors, instrument panel boxes and the like. The extrusion molded articles are used to mandrels and sheathes which are materials for rubber hoses processing, and further can be used to various uses.

EXAMPLE

The present invention is further described in more detail with reference to examples, but it should not be limited by these examples.

Concerning maleic acid modified poly-4-methyl-1-pentene (C) used in the examples and comparative examples, the melting point (Tm), the maleic acid grafted amount and the intrinsic viscosity [η] were measured by the following methods. Furthermore, concerning the resin compositions and the molded articles prepared in the examples and the comparative examples, various physical properties were measured in the following methods.

Melting point (Tm)

The melting point of maleic acid modified poly-4-methyl-1-pentene was measured in a temperature range of 30 to 280°C in a nitrogen atmosphere using DSC-60 manufactured by Shimazu Corporation. This measurement was carried out at a temperature increasing rate of 10°C/min.

Grafted amount

The amount of anhydrous maleic acid grafted on poly-4-methyl-1-pentene was measured in the following manner. A specimen was treated at 250°C for a pre-heated time of 5 min and a press time of 3 min to prepare a press film and the press film was subjected to IR measurement with a permeation method by means of FT-IR 410 manufactured by JASCO Corporation. The grated amount was determined from peak intensities at 1860 $cm^{-1}$ and 4321 $cm^{-1}$.

Intrinsic viscosity [η] (dl/g)

The intrinsic viscosity [η] is determined in a decalin solvent at 135°C using an Ubbelohde viscometer. Specifically, about 20 mg of a polymer powder, pellet or resin mass was dissolved in 25 ml of decalin and the specific viscosity ηsp thereof was measured in a 135°C oil bath. This decalin solution was diluted by adding 5 ml of the decalin solvent and then the specific viscosity ηsp thereof was measured in the same manner. The dilution procedure was repeated twice. When the concentration (C) is extrapolated into 0, the value of ηsp/C was determined as an intrinsic viscosity (refereed to the following formula).

$$[\eta] = \lim (\eta sp/C) \qquad (C \to 0)$$

Izod impact value (J/m)

The Izod impact value of a molded article with notch was measured at 23°C in accordance with ASTM D-256.

Tensile strength test

On the extruded film, stretched film and inflation film prepared in the examples and the comparative examples, the tensile test was carried out in a MD direction and in a TD direction in accordance with JIS K6301 (spun distance: 30 mm, tensile rate: 30 mm/min and 23°C) to determine the tensile strength at break (MPa), tensile elongation at break (%) and modulus in tension (MPa).

Surface tension

Concerning the extruded films prepared in the examples and the comparative examples, the surface tension was measured in the following manner. Several kinds of standard solutions having a surface tension of from 20 to 40 mN/m (manufactured by Wako Pure Chemical Industries Ltd.,) were prepared, the standard solution was dropped on the film and the contact angle ($\theta$) between the standard solution and the film was measured. From the resulting contact angle ($\theta$) , the cos $\theta$ value was determined, and the surface tension of the standard solution was plotted in an X axis and the cos $\theta$ value was plotted on a Y axis to form an approximate line. The value of the X axis at an intersection between the plotted line and the line shown by cos $\theta$ = 1 was determined as a value of the surface tension.

Measurement for Melt tension (mN)

The melt tension was determined by the following manner. Using a capillograph equipped with an attachment for measuring melt tension (manufactured by Toyo Seiki Seisaku-sho Ltd.,), a strand was descended at a piston descending rate of 15 mm/min and the strand was taken off at a rate of 1 m/min from a dies having a hole of a diameter 0 of 1 mm and a length of 10 mm at 260°C. After the stable taking-off of the stand, the taking off rate was increased to 40 m/min. When the stand was cut, the taking-off load of a pulley equipped with a load cell was measured.

Surface peeling strength (N/cm)

A three-layered film (specimen having a width of 25 mm) prepared by co-extrusion molding in accordance with JIS K-6854-3 was subjected to T peeling test on the film surface using a tensile testing machine at a testing rate of 100 mm/min at a measuring temperature of 23°C and thereby the peeling strength thereof was measured.

Synthesis of modified poly-4-methyl-1-pentene (C)

100 Parts by weight of poly-4-methyl-l-pentene (MX002UP; MFR (260°C, a load of 5 Kg), 3g/10 min, melting point (Tm) 224°C, manufactured by Mitsui Chemicals Inc.,), 1 part by weight of anhydrous maleic acid and 0.02 part by weight of 2,5-dimethyl-2,5-bis(t-butylperoxy)hexyne-3 as an organic peroxide were melt kneaded using a biaxial extruder (PCM45, Ø=45 mm, L/D=30, manufactured by Ikegai Ltd.,) at a cylinder temperature of 270°C for 3 min to prepare maleic acid modified poly-4-methyl-l-pentene.

The resulting maleic acid modified poly-4-methyl-l-pentene had a melting point (Tm) of 222°C, a maleic acid grafted amount to poly-4-methyl-l-pentene of 0.8% by weight and an intrinsic viscosity [$\eta$] in decalin at 135°C of 1.5 dl/g.

Examples 1 to 9 and Comparative Examples 1 to 7

In each example, MX002 having MFR (260°C, a load of 5 Kg) of 26g/10 min and a melting point (Tm) of 224°C, or RT 18 having MFR (260°C, a load of 5 Kg) of 20 g/10 min and a melting point (Tm) of 235°C both manufactured by Mitsui Chemicals Inc. , was used as poly-4-methyl-1-pentene (A).

Further, CM1041LO (PA6) having MFR (260°C, a load of 5 Kg) of 13 g/10 min and a melting point (Tm) of 225°C manufactured by Toray Industries Inc., was used as polyamide (B).

In each of Examples 1 to 9 and Comparative Examples 1 to 7, poly-4-methyl-1-pentene (A), polyamide (B) and modified poly-4-methyl-1-pentene (C) synthesized in Production Example 1, as shown in Table 1 or 2, were melt kneaded by a biaxial extruder (KZW-15, screw diameter of 15 mm, L/D=30, 270°C, a rotational number of 200 rpm manufactured by Technovel Corporation) to prepare a resin composition.

Next, a injection test piece having a thickness of 3.2 mm was prepared using a 30 tone injection molding machine (Nex30) manufactured by Toyo Seiki Seisaku-sho Ltd., at a cylinder temperature of 270°C at a mold temperature of 70°C.

An extrusion molded film having a thickness of about 50 $\mu$m was prepared using a monoaxial extruding machine (model TP20) manufactured by TPIC Co. Ltd. , and a film forming machine (20 mumØ) manufactured by Tanaka Seisakuki Co., at a cylinder temperature of 270°C, at a dies temperature of 270°C, at a roll temperature of 40°C.

The injection molded test piece was measured on Izod impact strength, tensile test properties and surface tension by the measuring methods as described above. The results of Examples 1 to 9 are shown in Table 1, and the results of Comparative Examples 1 to 7 are shown in Table 2. In each of Examples 1 to 3 and Comparative Example 6, the digital image concerning the film forming condition of the extrusion molded film with the content of polyamide (B) is shown in Fig. 2. For the part of the resin composition, the results of the melt tension measurement are shown in Tables 1 and 2.

Table 1.

| | | EXAMPLE | | | | | | | | |
|---|---|---|---|---|---|---|---|---|---|---|
| | | 1 | 2 | 3 | 4 | 5 | 6 | 7 | 8 | 9 |
| Poly-4-methyl -1-pentene (A) | Trade name | MX002 | MX002 | MX002 | MX002 | MX002 | MX002 | RT18 | RT18 | RT18 |
| | Part by weigh | 57 | 76 | 86 | 58 | 56 | 75 | 57 | 76 | 86 |
| Polyamide (B) | Part by weight | 38 | 19 | 9 | 39 | 37 | 8 | 38 | 19 | 9 |
| Modified poly-4-methyl -1-pentene (C) | Part by weight | 5 | 5 | 5 | 3 | 7 | 17 | 5 | 5 | 5 |
| Total | Part by weight | 100 | 100 | 100 | 100 | 100 | 100 | 100 | 100 | 100 |
| (A)/((A)+(B)) | Part by weight | 60.0 | 80.0 | 90.5 | 59.8 | 60.2 | 90.4 | 60.0 | 80.0 | 90.5 |
| (B)/((A)+(B)) | Part by weight | 40.0 | 20.0 | 9.5 | 40.2 | 39.8 | 9.6 | 40.0 | 20.0 | 9.5 |
| (C)/((A)+(B)) | Part by weight | 5.3 | 5.3 | 5.3 | 3.1 | 7.5 | 20.5 | 5.3 | 5.3 | 5.3 |
| | | | | | | | | | | |
| Melt tension | mN | 33.6 | 24.7 | 21.6 | - | - | - | 26.4 | - | 21.1 |
| Izod impact value | J/m | 84 | 30 | 29 | 84 | 45 | 25 | 57 | 25 | 27 |
| Tensile strength at break (MD/TD) | MPa | 44/ 27 | 33/ 25 | 30/ 23 | 55/ 21 | 45/ 26 | 30/ 22 | 50/ 28 | 34/ 28 | 29/ 24 |
| Tensile elongation at break (MD/TD) | % | 319/ 277 | 223/ 315 | 230/ 316 | 302/ 194 | 223/ 210 | 256/ 269 | 292/ 203 | 231/ 230 | 218/ 245 |
| Modulus in tension (MD/TD) | MPa | 571/ 498 | 504/ 503 | 503/ 525 | 719/ 651 | 679/ 672 | 559/ 584 | 786/ 879 | 837/ 909 | 873/ 904 |
| Surface tension | mN/m | 25 | 24 | 24 | 25 | 24 | 25 | 25 | 24 | 24 |

(A)/((A)+(B)): The content of (A) based on 100 parts by weight of the total of (A) and (B).
(B)/((A)+(B)): The content of (B) based on 100 parts by weight of the total of (A) and (B).
(C)/((A)+(B)): The content of (C) based on 100 parts by weight of the total of (A) and (B).

Table 2

| | | COMPARATIVE EXAMPLE | | | | | | |
|---|---|---|---|---|---|---|---|---|
| | | 1 | 2 | 3 | 4 | 5 | 6 | 7 |
| Poly-4-methyl -1-pentene (A) | Trade name | MX002 | RT18 | MX002 | RT18 | - | MX002 | MX002 |
| | Part by weight | 60 | 60 | 100 | 100 | 0 | 38 | 19 |
| Polyamide (B) | Part by weight | 40 | 40 | 0 | 0 | 100 | 57 | 76 |
| Modified poly-4-methyl -1-pentene (C) | Part by weight | 0 | 0 | 0 | 0 | 0 | 5 | 5 |
| Total | Part by weight | 100 | 100 | 100 | 100 | 100 | 100 | 100 |
| (A)/((A)+(B)) | wt% | 60.0 | 60.0 | 100.0 | 100.0 | 0.0 | 40.0 | 20.0 |
| (s)/((A)+(B)) | wt% | 40.0 | 40.0 | 0.0 | 0.0 | 100.0 | 60.0 | 80.0 |
| (C)/((A)+(B)) | wt% | 0.0 | 0.0 | 0.0 | 0.0 | 0.0 | 5.3 | 5.3 |
| | | | | | | | | |
| Melt tension | mN | - | - | 13.3 | 13.0 | 8.2 | - | 24.1 |
| Izod impact value | J/m | No molded article was obtained | No molded article was obtained | 28 | 31 | 95 | No molded article was obtained | 82 |
| Tensile strength at break (MD/TD) | MPa | | | 25/ 19 | 23/ 22 | 67/ 51 | | 61/ 42 |
| Tensile elongation at break (MD/TD) | % | | | 291/ 337 | 138/ 116 | 184/ 284 | | 272/ 217 |
| Modulus in tension (MD/TD) | MPa | | | 408/ 425 | 1049/ 1119 | 636/ 735 | | 588/642 |
| Surface tension | mN/m | | | 24 | 24 | 42 | | 40 |

(A)/((A)+(B)): The content of (A) based on 100 parts by weight of the total of (A) and (B).
(B)/((A)+(B)): The content of (B) based on 100 parts by weight of the total of (A) and (B).
(C)/((A)+(B)): The content of (C) based on 100 parts by weight of the total of (A) and (B).

As is clear from the results of Comparative Examples 1 and 2, the presence of modified poly-4-methyl-1-pentene (C) is essential for the 4-methyl-1-pentene resin composition comprised in the film of the present invention.

From the comparison between Examples and Comparative Examples, it is clear that when the mixing proportion of poly-4-methyl-1-pentene (A) and polyamide (B) is in the definite range, the strength of the extrusion molded film can be enhanced with maintaining the release properties (surface tension) which is inherent in poly-4-methyl-1-pentene (A), and further, when the mixing proportion of poly-4-methyl-1-pentene (A) and polyamide (B) is in the definite range, the appearance of the resulting film is excellent.

Examples 10-18 and Comparative Examples 8 and 9

From the extrusion molded film prepared in each of Examples 1 to 3, Examples 7 to 9 and Comparative Examples 3 and 4, a specimen having a size of 70 x 70 mm was collected and mono-axially stretched at a stretching temperature of 100°C at a stretching rate of 2 mm/s in the prescribed magnification in the MD direction of the extrusion molded film using automatic biaxial stretching device IMC-18BD model manufactured by Imoto Machinery Co., Ltd. After the stretching, the specimen was heated to 200°C and fixed with heat in the stretching condition for 10 min to prepare a stretching molded film having the prescribed magnification.

The value of the prescribed stretching magnification and the results of the tensile test on the stretching molded film are shown in Tables 3 and 4. Furthermore, concerning to Examples 10 to 12 and Comparative Example 8, the digital image of the stretching molded condition of the stretching molded film with the content of polyamide (B) is shown in Fig. 3.

Table 3

| | | Example | | | Comparative Example |
|---|---|---|---|---|---|
| | | 10 | 11 | 12 | 8 |
| Film sample | | Ex. 1 | Ex. 2 | Ex. 3 | Comp. Ex. 3 |
| Poly-4-methyl -1-pentene (A) | Trade name | MX002 | MX002 | MX002 | MX002 |
| | Part by weight | 57 | 76 | 86 | 100 |
| Polyamide (B) | Part by weight | 38 | 19 | 9 | 0 |
| Modified poly-4-methyl -1-pentene (C) | Part by weight | 5 | 5 | 5 | 0 |
| Total | Part by weight | 100 | 100 | 100 | 100 |
| (A)/((A)+(B)) | wt% | 60.0 | 80.0 | 90.5 | 100.0 |
| (B) / ((A) + (B)) | wt% | 40.0 | 20.0 | 9.5 | 0.0 |
| (c) /((A)+(B)) | wt% | 5.3 | 5.3 | 5.3 | 0.0 |
| | | | | | |
| Stretching magnification | | 2 times | 2 times | 2 times | 2 times |
| Tensile strength at break (MD/TD) | MPa | 79/ 24 | 71/ 23 | 63/ 20 | Uniform stretching molded article was not obtained |
| Tensile elongation at break (MD/TD) | % | 47/ 163 | 41/ 252 | 51/ 260 | |
| Modulus in tension (MD/TD) | MPa | 837/ 782 | 764/ 748 | 643/ 658 | |
| (A)/((A)+(B)): The content of (A) based on 100 parts by weight of the total of (A) and (B).<br>(B)/((A)+(B)): The content of (B) based on 100 parts by weight of the total of (A) and (B).<br>(C)/((A)+(B)): The content of (C) based on 100 parts by weight of the total of (A) and (B). | | | | | |

Table 4

| | | Example | | | | | | Comparative Example |
|---|---|---|---|---|---|---|---|---|
| | | 13 | 14 | 15 | 16 | 17 | 18 | 9 |
| Film sample | | Ex. 7 | Ex. 7 | Ex. 8 | Ex. 8 | Ex. 9 | Ex. 9 | Comp. Ex. 4 |

(continued)

| | | Example | | | | | | Comparative Example |
|---|---|---|---|---|---|---|---|---|
| | | 13 | 14 | 15 | 16 | 17 | 18 | 9 |
| Poly-4-methyl -1-pentene (A) | Trade name | RT18 | RT18 | RT18 | RT18 | RT18 | RT18 | RT18 |
| | Part by weight | 57 | 57 | 76 | 76 | 86 | 86 | 100 |
| Polyamide (B) | Part by weight | 38 | 38 | 19 | 19 | 9 | 9 | 0 |
| Modified poly-4-methyl -1-pentene (C) | Part by weight | 5 | 5 | 5 | 5 | 5 | 5 | 0 |
| Total | Part by weight | 100 | 100 | 100 | 100 | 100 | 100 | 100 |
| (A)/((A)+(B)) | wt% | 60.0 | 60.0 | 80.0 | 80.0 | 90.5 | 90.5 | 100.0 |
| (B)/((A)+(B)) | wt% | 40.0 | 40.0 | 20.0 | 20.0 | 9.5 | 9.5 | 0.0 |
| (C)/((A)+(B)) | wt% | 5.3 | 5.3 | 5.3 | 5.3 | 5.3 | 5.3 | 0.0 |
| | | | | | | | | |
| Stretching magnification | | 2 times | 2.8 times | 2 times | 2.8 times | 2 times | 2.8 times | 2 times |
| Tensile strength at break (MD/TD) | MPa | 83/ 26 | 113/ 24 | 64/ 29 | 89/ 25 | 57/ 23 | 82/ 33 | Uniform stretching molded article was not obtained |
| Tensile elongation at break (MD/TD) | % | 58/ 198 | 39/ 160 | 42/ 261 | 28/ 227 | 63/ 94 | 26/ 10 | |
| Modulus in tension (MD/TD) | MPa | 1209/ 840 | 1150/ 836 | 1029/ 927 | 1185/ 800 | 962/ 949 | 1290/ 1210 | |

(A)/((A)+(B)): The content of (A) based on 100 parts by weight of the total of (A) and (B).
(B)/((A)+(B)): The content of (B) based on 100 parts by weight of the total of (A) and (B).
(C)/((A)+(B)): The content of (C) based on 100 parts by weight of the total of (A) and (B).

As is clear from the molding conditions of the stretching molded films in Examples 10 to 12, even when the 4-methyl-1-pentene resin composition is stretching molded, a uniform film can be prepared. The resin composition has such excellent properties, as compared with Comparative Example 8 that when poly-4-methyl-1-pentene (A) is singly stretching molded, a film is stretched locally and thereby a uniform film as a whole is not prepared.

As is clear from Examples 10 to 12 and Examples 13 to 18, when the stretching magnification is increased for the 4-methyl-1-pentene resin composition, the strength of the film is increased. In the case that the mixing proportion of poly-4-methyl-1-pentenen (A) and polyamide (B) is in the definite range, when the stretching magnification is two or more times, the film has the same strength as that of the extrusion molded film of polyamide (B) in Comparative Example 5. Therefore, the stretching molded film prepared from the 4-methyl-1-pentene resin composition can be applied to various uses as a new film having both of release properties and strength.

Examples 19 to 21 and Comparative Examples 10 and 11

In each example, using each of the resin compositions prepared in Examples 1 to 3, and Comparative Examples 3 and 5, an inflation film was molded by an inflation film molding machine 20 mmØ inflation film production device manufactured by TPIC Co. , Ltd. at a cylinder temperature of 270°C at a dice temperature of 270°C at a taking up rate of 2.5 m/min in a blow up ratio of 2.0 to 2.5. The film shape, the film thickness and the tensile test properties of the resulting inflation molded film are shown in Table 5. Furthermore, in Examples 19 to 21, and Comparative Example 10, the digital image of the molding conditions of the inflation molded film is shown in Fig. 4.

Comparative Examples 12 and 13

Poly-4-methyl-1-pentene (A) (manufactured by Mitsui Chemical Inc., MX002 having a MFR at 260°C under a load of 5 Kg of 26 g/10 min, and having a melting point (Tm) of 224°C, polyamide (B) CM1041LO manufactured by Toray Industries Inc. , and anhydrous maleic acid modified polypropylene AdmerQ-3000 (anhydrous maleic acid content of 0. 6 wt%, an anhydrous maleic acid modified isotactic propylene polymer having a weight average molecular weight Mw in terms of polypropylene measured by steric exclusion chromatography of 92000, Tm = 158°C) manufactured by Mitsui Chemicals Inc., were melt kneaded by a twin-axial extruder in the same conditions as those of Example 1, to prepare a resin composition.

The resin composition was subjected to inflation film molding in the same conditions as those of Example 19.

The film shape, film thickness and tensile test physical properties of the resulting inflation molded film are shown in Table 5.

Table 5

| | | Example | | | Comparative Example | | | |
|---|---|---|---|---|---|---|---|---|
| | | 19 | 20 | 21 | 10 | 11 | 12 | 13 |
| Resin composition sample | | Ex. 1 | Ex. 2 | Ex. 3 | Comp. Ex. 3 | Comp. Ex. 5 | - | - |
| Poly-4-methyl -1-pentene (A) | Trade name | MX002 | MX002 | MX002 | X002 | - | MX002 | MX002 |
| | Part by weight | 57 | 76 | 86 | 100 | 0 | 57 | 55 |
| Polyamide (B) | Part by weight | 38 | 19 | 9 | 0 | 100 | 38 | 36 |
| Modified poly-4-methyl -1-pentene (C) | Part by weight | 5 | 5 | 5 | 0 | 0 | 0 | 0 |
| Modified polypropylene | Part by weight | 0 | 0 | 0 | 0 | 0 | 5 | 9 |
| Total | Part by weigh | 100 | 100 | 100 | 100 | 100 | 100 | 100 |
| (A)/((A)+(B)) | wt% | 60.0 | 80.0 | 90.5 | 100.0 | 0.0 | 60.0 | 60.4 |
| (B)/((A)+(B)) | wt% | 40.0 | 20.0 | 9.5 | 0.0 | 100.0 | 40.0 | 39.6 |
| (C)/((A)+(B)) | wt% | 5.3 | 5.3 | 5.3 | 0.0 | 0.0 | 5.3 | 9.9 |
| | | | | | | | | |
| Film shape | | Uniform thickness | Uniform thickness | Uniform thickness | No Uniform thickness | Molded article was not obtained | Uniform thickness | Uniform thickness |
| Film thickness | μm | 50 | 50 | 50 | 80 | | 50 | 50 |
| Tensile strength at break (MD/TD) | MPa | 42/29 | 36/29 | 29/29 | 27/28 | | 45/17 | 25/21 |
| Tensile elongation at break (MD/TD) | % | 242/ 205 | 245/ 270 | 231/ 316 | 260/ 360 | | 325/ 2 | 150/ 36 |

(A)/((A)+(B)): The content of (A) based on 100 parts by weight of the total of (A) and (B).
(B)/((A)+(B)): The content of (B) based on 100 parts by weight of the total of (A) and (B).
(C)/((A)+(B)): The content of (C) based on 100 parts by weight of the total of (A) and (B).

As is clear from the results in Examples 19 to 21, and Comparative Examples 10 and 11, using the 4-methyl-1-pentene resin composition, an inflation film having a uniform width and a uniform thickness can be prepared.

From the results, as shown in Fig.l, it is considered that the 4-methyl-1-pentene resin composition has the above results because the resin composition has good physical properties in inflation film molding such that the melt tension has an upper convex curved line against the additive property of the melt tension of poly-4-methyl-1-pentene (A) or polyamide (B).

In each of Comparative Examples 12 and 13, the results on the inflation film of the resin composition prepared using modified polypropylene are shown. From the results, in the case of using modified polypropylene, it is found that the elongation in the TD direction is not good extremely in the tensile test. This is caused by the reason that the block polymer formed from modified PP and polyamide (B) has not sufficient compatibility with poly-4-methyl-l-pentene (A). From these results, it is clear that in the case of using modified poly-4-methyl-1-pentene (C) as the compatibilizing agent between the
poly-4-methyl-1-pentene (A) and polyamide (B) in the present invention, excellent effects can be exhibited.

Examples 22 to 24, and Comparative Example 14

Using a film molding machine (SZW-20-25G manufactured by Technovel Corporation), a three-layered co-extrusion resin laminated film having a thickness of 50 μm (outer layer/ inner layer/ outer layer = 15 μm/ 20μm/ 15 μm) was prepared.

As is shown in Table 6, the both outer layers in Example 22 comprises the resin composition of 100 parts by weight of the resin composition prepared in Example 1 and 15 parts by weight of modified poly-4-methyl-1-pentene (C) prepared in the production example 1. The both outer layers in Example 23 comprises the resin composition of 100 parts by weight of the resin composition prepared in Example 3 and 15 parts by weight of modified poly-4-methyl-1-pentene (C) prepared in the production example 1. The both outer layers in Example 24 comprise the resin composition prepared in Example 6. Furthermore, in Comparative Example, the both outer layers comprise poly-4-methyl-1-pentene (MX002UP manufactured by Mitsui Chemical Inc., MFR (260°C under a load of 5 Kg) of 3 g/10 min, a melting point (Tm) of 224°C).

The inner layer comprises polyamide (B) (CM1041LO manufactured by Toray Industries Inc.

The laminated film was molded at a dice temperature of 270°C with a dice clearance of 0.5 mm.

The tensile test results of the laminated films prepared in Examples 22 to 24 and the measuring results of the peeling strength between the outer layers and the inner layer are shown in Table 6.

Table 6

| | | | Example | | |
|---|---|---|---|---|---|
| | | | 22 | 23 | 24 |
| Resin composition for both outer layers | Resin composition sample | | Ex. 1 | Ex. 3 | Ex. 6 |
| | | Part by weight | 1.00 | 100 | 100 |
| | Modified poly-4-methyl-1 -pentene (C) | Part by weight | 15 | 15 | 0 |
| Details of Resin composition | Poly-4-methyl -1-pentene (A) | Trade name | MX002 | MX002 | MX002 |
| | | Part by weight | 57 | 86 | 75 |
| | Polyamide (B) | Part by weight | 38 | 9 | 8 |
| | Modified poly-4-methyl -1-pentene (C) | Part by weight | 20 | 20 | 17 |
| | (A)//(A)+(B)) | Wt% | 60.0 | 90.5 | 90.4 |
| | (B)/((A)+(B)) | Wt% | 40.0 | 9.5 | 9.6 |
| | (C)/((A)+(B)) | Wt% | 21.1 | 21.1 | 20.5 |
| | | | | | |

(continued)

| | | | Example | | |
|---|---|---|---|---|---|
| | | | 22 | 23 | 24 |
| Tensile strength at break (MD/TD) | | MPa | 58/65 | 59/61 | 55/61 |
| Tensile elongation at break (MD/TD) | | % | 296/345 | 302/331 | 300/338 |
| Peeling strength | | N/cm | 0.7 | 1.8 | 2.0 |
| (A)/((A)+(B)): The content of (A) based on 100 parts by weight of the total of (A) and (B).<br>(B)/((A)+(B)): The content of (B) based on 100 parts by weight of the total of (A) and (B).<br>(C)/((A)+(B)): The content of (C) based on 100 parts by weight of the total of (A) and (B). | | | | | |

From the results of Examples 22 to 24, the laminated film formed from 4-methyl-l-pentene resin composition and polyamide (B) according to the present invention has good release properties because of having a layer formed from the 4-methyl-1-pentene resin composition as an outer layer, as is clear from the results of Examples 1 to 9. Furthermore, it is clear that the laminated film has the same strength as that of the extrusion molded film of polyamide (B) (Comparative Example 5). Moreover, it is clear that the laminated film has good interlayer adhesion because of having high peeling strength between the outer layer and the inner layer.

In Comparative Example 14, the production of a laminated film was carried out. However, the outer layer and the inner layer were not adhered all and they were easily delaminated (peeling strength was almost 0). As a result, a laminated film was not obtained.

For the laminated film formed from the 4-methyl-1-pentene resin composition and polyamide (B) according to the present invention, the addition amount of modified poly-4-methyl-1-pentene (C) is increased in order to improve the interlayer adhesion strength. From the results of Examples 22, 23 and 24, it is clear that the addition and kneading of modified poly-4-methyl-1-pentene (C) may be carried out after the production of the 4-methyl-1-pentene resin composition or at the time of the production of the 4-methyl-1-pentene resin composition and the effects in the above addition and kneading methods are almost same.

In the small scale production, it is possible to add modified poly-4-methyl-1-pentene (C) again to the 4-methyl-1-pentene resin composition. In the large-scale production, it is possible to increase the amount of modified poly-4-methyl-1-pentene (C) in the production step of the 4-methyl-1-pentene resin composition in consideration of cost. Accordingly, the addition thereof can be controlled flexibly in the production process.

Example 25

A resin laminated film having a thickness of 50 μm and having 3 layers (I layer/II layer/ III layer = 15 μm/10/μm/25μm) was prepared by means of a film molding machine (three kinds and three layered film forming machine manufactured by TPIC Co., Ltd).

The I layer comprises the resin composition prepared in Example 1, the II layer comprises the resin composition prepared in Example 6 and the III layer comprises polyamide (B)(CM1041LO manufactured by Toray Industries Ltd.

The laminated film was molded at a dice temperature of 270°C with a dice clearance of 0.5 mm.

The tensile test results on the resulting laminated film and the measuring results on the interlayer peeling strength between the II layer and the III layer are shown in Table 7.

Table 7

| | | | Example 25 |
|---|---|---|---|
| I layer resin composition | Resin composition sample | | Example 1 |
| II layer resin composition | Resin composition sample | | Example 6 |
| III layer resin composition | Polyamide (B) | | |
| | | | |
| Tensile strength at break (MD/TD) | | MPa | 51/48 |
| Tensile elongation at break (MD/TD) | | % | 286/323 |
| Peeling strength | | N/cm | Peeling cannot be conducted |

From the results of Example 25, it is clear that the laminated film formed from two layers of the 4-methyl-1-pentene resin composition and one layer of polyamide (B) according to the present invention has almost same strength as that of the extrusion molded film of polyamide (B) (Comparative Example 5). Furthermore, it is clear that since the laminated film in the present example has high peeling strength between the resin composition layer and the polyamide layer similar to the laminated films prepared in Examples 22 to 24, it has good interlayer adhesion.

The II layer and the III layer in the present example have the same resin compositions as those of the inner layer and the outer layer in Example 24. In Example 25, the sample layer of the II layer resin composition has a thickness thinner than the resin composition layer of the outer layer in Example 24. The proportion of modified poly-4-methyl-1-pentene (C) in the resin sample layer in the part of the interface depth is larger than that of Example 24. Therefore, it is presumed that the amount of modified poly-4-methyl-1-pentene (C) which can be concerned in adhesion with the polyamide layer increases and thereby the peeling strength is larger than the measurement limit, namely, peeling cannot be performed.

POSSIBILITY OF INDUSTRIAL USE

The molded articles formed from the poly-4 -methyl-1-pentene resin composition can have improved stretching properties, melt tension and inflation molding properties with maintaining low surface tension which is inherent in poly-4-methyl-1-pentene (A). Particularly, the poly-4-methyl-1-pentene resin composition is very useful in the field of release films.

## Claims

1. A film which is selected from an extrusion molded film, a stretching molded film, an inflation molded film and a release film, and which comprises a poly-4-methyl-1-pentene resin composition comprising 50 to 99 parts by weight of poly-4-methyl-1-pentene (A), 1 to 50 parts by weight of polyamide (B) and 0.1 to 30 parts by weight of modified poly-4-methyl-1-pentene (C) obtainable by graft modification with an ethylenic unsaturated bond-containing monomer, provided that the total amount of (A) and (B) is 100 parts by weight.

2. The film according to claim 1 wherein the poly-4-methyl-1-pentene resin composition comprises 58 to 92 parts by weight of poly-4-methyl-1-pentene (A) and 8 to 42 parts by weight of polyamide (B) provided that the total amount of (A) and (B) is 100 parts by weight.

3. The film according to claim 1 or claim 2 wherein the poly-4-methyl-1-pentene (A) has the following properties (A-i) and (A-ii);

   (A-i) the melt flow rate (MFR; ASTM D1238, 260°C, 5 kgf) is from 1 to 500 g/10 min, and
   (A-ii) the melting point (Tm) is from 210 to 250°C.

4. The film according to any one of claims 1 to 3 wherein the polyamide (B) has the following properties (B-i) and (B-ii);

   (B-i) the melt flow rate (MFR; ASTM D1238, 260°C, 5 kgf) is from 1 to 500 g/10 min, and
   (B-ii) the melting point (Tm) is from 150 to 300°C.

5. The film according to any one of claims 1 to 4 wherein the modified poly-4-methyl-1-pentene (C) has the following properties (C-i) to (C-iii);

   (C-i) the melt point (Tm) is from 200 to 240°C,
   (C-ii) the grafted amount of the ethylenic unsaturated bond-containing monomer in modified poly-4-methyl-1-pentene (C) is from 0.1 to 10 % by weight, and
   (C-iii) the intrinsic viscosity at 135°C in decalin is from 0.2 to 4 dl/g.

6. The film according to any one of claims 1 to 5 wherein the ethylenic unsaturated bond-containing monomer is anhydrous maleic acid.

7. A laminated article comprising the film as claimed in any one of claims 1 to 6 as a layer (I), and a polyamide layer (II).

## Patentansprüche

1. Folie, die aus einer extrusionsgeformten Folie, einer streckgeformten Folie, einer blasgeformten Folie und einer Trennfolie ausgewählt ist und die eine Poly-4-methyl-1-penten-Harzzusammensetzung umfasst, die 50 bis 99 Gewichtsteile Poly-4-methyl-1-penten (A), 1 bis 50 Gewichtsteile Polyamid (B) und 0,1 bis 30 Gewichtsteile modifiziertes Poly-4-methyl-1-penten (C), erhältlich durch Pfropfmodifizieren mit einem eine ethylenisch ungesättigte Bindung enthaltenden Monomer, umfasst, mit der Maßgabe, dass die Gesamtmenge von (A) und (B) 100 Gewichtsteile beträgt.

2. Folie gemäß Anspruch 1, wobei die Poly-4-methyl-1-penten-Harzzusammensetzung 58 bis 92 Gewichtsteile Poly-4-methyl-1-penten (A) und 8 bis 42 Gewichtsteile Polyamid (B) enthält, mit der Maßgabe, dass die Gesamtmenge von (A) und (B) 100 Gewichtsteile beträgt.

3. Folie gemäß Anspruch 1 oder 2, wobei das Poly-4-methyl-1-penten (A) die folgenden Eigenschaften (A-i) und (A-ii) aufweist:

   (A-i) die Schmelzflussrate (MFR; ASTM D1238, 260°C, 5 kgf) beträgt 1 bis 500 g/10 min, und
   (A-ii) der Schmelzpunkt (Tm) beträgt 210 bis 250°C.

4. Folie gemäß einem der Ansprüche 1 bis 3, wobei das Polyamid (B) die folgenden Eigenschaften (B-i) und (B-ii) aufweist:

   (B-i) die Schmelzflussrate (MFR; ASTM D1238, 260°C, 5 kgf) beträgt 1 bis 500 g/10 min, und
   (B-ii) der Schmelzpunkt (Tm) beträgt 150 bis 300°C.

5. Folie gemäß einem der Ansprüche 1 bis 4, wobei das modifizierte Poly-4-methyl-1-penten (C) die folgenden Eigenschaften (C-i) bis (C-iii) aufweist:

   (C-i) der Schmelzpunkt (Tm) beträgt 200 bis 240°C,
   (C-ii) die gepfropfte Menge des eine ethylenisch ungesättigte Bindung enthaltenden Monomers in dem modifizierten Poly-4-methyl-1-penten (C) beträgt 0,1 bis 10 Gew.%, und
   (C-iii) die intrinsische Viskosität bei 135°C in Decalin beträgt 0,2 bis 4 dl/g.

6. Folie gemäß einem der Ansprüche 1 bis 5, wobei das eine ethylenisch ungesättigte Bindung enthaltende Monomer wasserfreie Maleinsäure ist.

7. Laminierter Gegenstand, umfassend die Folie gemäß einem der Ansprüche 1 bis 6 als Schicht (I) und eine Polyamidschicht (II).

## Revendications

1. Film qui est sélectionné parmi un film moulé par extrusion, un film moulé par étirage, un film moulé par soufflage et un film antiadhésif, et qui comprend une composition de résine de poly-4-méthyl-1-pentène comprenant 50 à 99 parties en poids d'un poly-4-méthyl-1-pentène (A), 1 à 50 parties en poids d'un polyamide (B) et 0,1 à 30 parties en poids d'un poly-4-méthyl-1-pentène modifié (C) pouvant être obtenu par modification par greffage avec un monomère contenant une liaison insaturée éthylénique, à condition que la quantité totale de (A) et de (B) soit de 100 parties en poids.

2. Film selon la revendication 1 dans lequel la composition de résine de poly-4-méthyl-1-pentène comprend 58 à 92 parties en poids d'un poly-4-méthyl-1-pentène (A) et 8 à 42 parties en poids d'un polyamide (B) à condition que la quantité totale de (A) et de (B) soit de 100 parties en poids.

3. Film selon la revendication 1 ou la revendication 2 dans lequel le poly-4-méthyl-1-pentène (A) possède les propriétés (A-i) et (A-ii) suivantes;

   (A-i) l'indice de fluidité à l'état fondu (MFR; ASTM D1238, 260 °C, 5 kgf) est de 1 à 500 g/10 minutes, et
   (A-ii) le point de fusion (Tm) est de 210 à 250 °C.

4. Film selon l'une quelconque des revendications 1 à 3 dans lequel le polyamide (B) possède les propriétés (B-i) et (B-ii) suivantes;

(B-i) l'indice de fluidité à chaud (MFR; ASTM D1238, 260 °C, 5 kgf) est de 1 à 500 g/10 minutes, et
(B-ii) le point de fusion (Tm) est de 150 à 300 °C.

5. Film selon l'une quelconque des revendications 1 à 4 dans lequel le poly-4-méthyl-1-pentène modifié (C) possède les propriétés (C-i) à (C-iii) suivantes;

(C-i) le point de fusion (Tm) est de 200 à 240 °C,
(C-ii) la quantité greffée du monomère contenant une liaison insaturée éthylénique dans le poly-4-méthyl-1-pentène modifié (C) est de 0,1 à 10 % en poids, et
(C-iii) la viscosité intrinsèque à 135 °C dans de la décaline est de 0,2 à 4 dl/g.

6. Film selon l'une quelconque des revendications 1 à 5 dans lequel le monomère contenant une liaison insaturée éthylénique est l'acide maléique anhydre.

7. Article stratifié comprenant le film tel que revendiqué dans l'une quelconque des revendications 1 à 6 sous la forme d'une couche (I), et une couche de polyamide (II).

Fig. 1

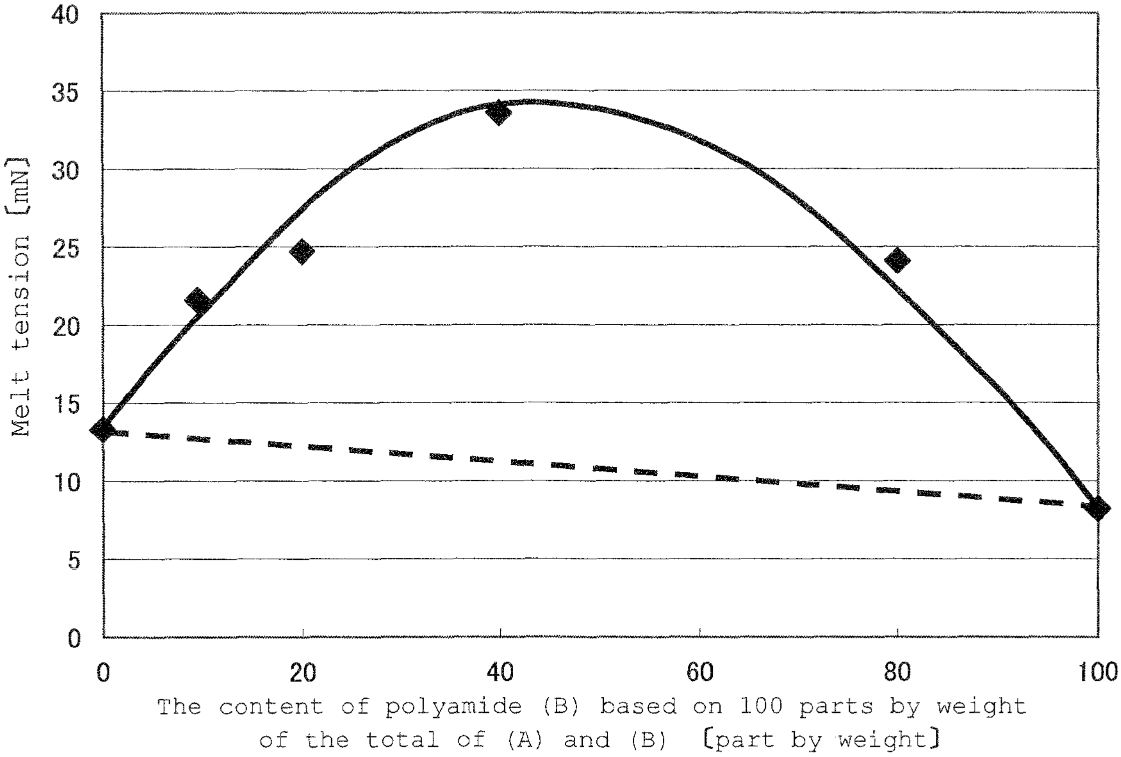


Fig. 2

| | Example 3 | Example 2 | Example 1 | Comp. Ex. 6 |
|---|---|---|---|---|
| (B)/((A)+(B)) 〔part by weight〕 | 9.5 | 20.0 | 40.0 | 60.0 |
| Picture of extrusion molded film | 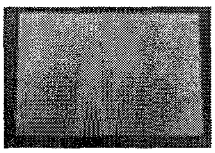 | 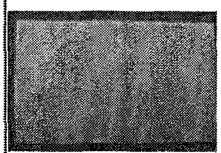 | 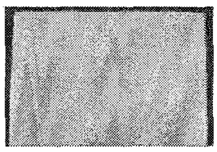 | 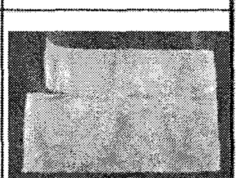 |
| Evaluation on film molding | Good film molding | Good film molding | Good film molding | No good film molding |

Fig. 3

| | Comp. Ex. 8 | Example 12 | Example 11 | Example 10 |
|---|---|---|---|---|
| (B)/((A)+(B)) [part by weight] | 0 | 9.5 | 20.0 | 40.0 |
| Picture of stretching molded film (two times stretching) | 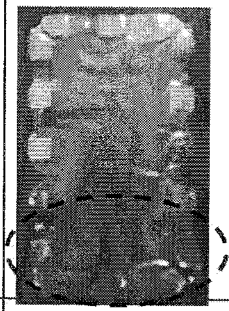 | 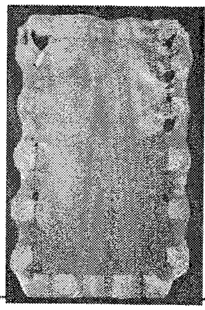 | 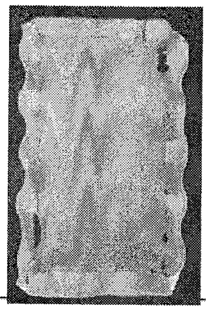 | 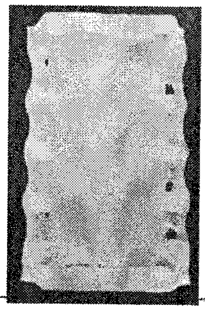 |
| Evaluation on film molding | Locally stretching shown by dotted line | Uniformly stretching | Uniformly stretching | Uniformly stretching |

Fig. 4

| | Comp. Ex. 10 | Example 21 | Example 20 | Example 19 |
|---|---|---|---|---|
| (B)/((A)+(B)) [part by weight] | 0 | 9.5 | 20.0 | 40.0 |
| Picture of inflation molded film | 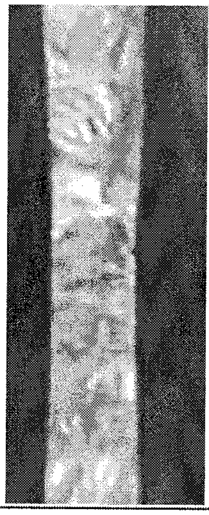 | 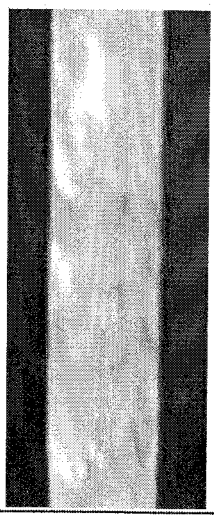 | 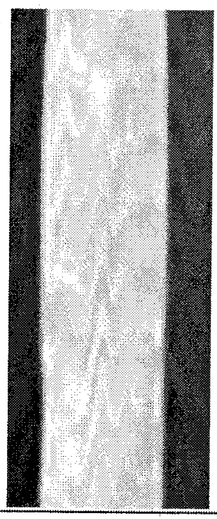 | 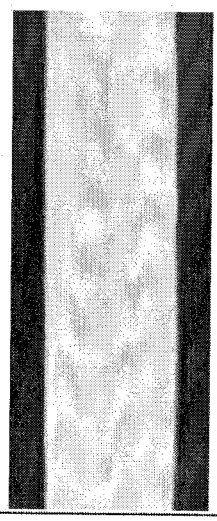 |
| Evaluation on film molding | Width ununiform Thickness 80 μm | Width uniform Thickness 50 μm | Width uniform Thickness 50 μm | Width uniform Thickness 50 μm |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6053549 A
- JP S63215761 A
- JP 2000198118 A
- JP 2002192673 A
- JP 2002158242 A
- JP H1160848 A
- JP H4120169 A
- JP H251941 B
- JP 2003105022 A